(19) Europäisches Patentamt
European Patent Office
Office européen des brevets

(11) EP 1 130 838 B1

(12) **EUROPEAN PATENT SPECIFICATION**

(45) Date of publication and mention of the grant of the patent:
**15.10.2008 Bulletin 2008/42**

(51) Int Cl.:
*H04L 1/00* (2006.01) *H04L 25/05* (2006.01)

(21) Application number: **01301855.1**

(22) Date of filing: **28.02.2001**

(54) **Transmission rate matching apparatus and method thereof for a mobile communication system**

System und Verfahren zur Anpassung von Übertragungsraten für ein Mobilkommuniationssystem

Système et procédé d'adaptation de débit pour un système de communication mobile

(84) Designated Contracting States:
**AT BE CH CY DE DK ES FI FR GB GR IE IT LI LU MC NL PT SE TR**

(30) Priority: **29.02.2000 KR 2000010162**

(43) Date of publication of application:
**05.09.2001 Bulletin 2001/36**

(73) Proprietor: **LG ELECTRONICS INC.**
**Seoul (KR)**

(72) Inventors:
- **You, Cheol Woo**
  **Gwanack-ku,**
  **Seoul (KR)**
- **Seol, Jee Woong**
  **Seocho-ku,**
  **Seoul (KR)**
- **Kang, Young Hwan**
  **Unpyung-ku,**
  **Seoul (KR)**

(74) Representative: **McLeish, Nicholas Alistair Maxwell et al**
**Boult Wade Tennant**
**Verulam Gardens**
**70 Gray's Inn Road**
**London WC1X 8BT (GB)**

(56) References cited:
**EP-A- 0 759 665** **EP-A- 0 952 673**
**US-A- 5 898 698**

- **"ETSI TS 125 212 Universal Mobile Telecommunications system (UMTS); Multiplexing and channel coding (FDD)" ETSI TS 125 212 V3.1.1, January 2000 (2000-01), XP002161524**
- **HEEGARD C ET AL: "TURBO CODING" TURBO CODING, KLUWER INTERNATIONAL SERIES IN ENGINEERING AND COMPUTER SCIENCE, BOSTON, MA : KLUWER ACADEMIC PUBL, US, 1999, pages 35-63, XP002256962 ISBN: 0-7923-8378-8**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 130 838 B1

**Description**

BACKGROUND OF THE INVENTION

1. Field of the Invention

The present invention relates to a next generation mobile communication system for distributing biased data bits transmitted by being included to each column of a block interleaver uniformly in a wire/wireless communication system transmitting data between a base station and a terminal by performing a transmission matching after block-interleaving error-correction-encoded code word bits, in particular to a transmission rate matching apparatus and a method thereof for a next generation mobile communication system which is capable of performing efficient transmission rate matching by crossing code word bits by using a switching algorithm for distributing the biased data bits uniformly or inputting an imaginary bit to an interleaver.

2. Description of the Prior Art

Generally, the conventional next generation mobile communication system uses an encoder for performing error-correction-coding and a channel interleaver together in order to provide various transmission speeds and service qualities. In Particular, a 3GPP (3$^{rd}$ generation partnership project) adapts the above-described transmission method for an IMT-2000.

Lots of interleaving methods are used at present but generally a block interleaver method constructed with a row and a column is used The 3GPP also adapts a method same kind with the block interleaver method.

FIG.1 is a block diagram illustrating a next generation mobile communication system having the conventional up-link format, it comprises an encoder 101 for performing error-correction-encoding of an inputted bit column X(t), a switching unit 102 for switching code word bits coded in the encoder sequentially, a block interlevaer 103 for interleaving the code word bits switched in the switching unit, a radio frame segment processing unit 104 for dividing the bits interleaved in the block interleaver 103 into one radio frame unit, and a transmission rate matching unit 105 for performing transmission rate matching process by being inputted the radio frame divided in the radio frame segment processing unit 104 and arranging the inputted radio frame to have a certain transmission rate and transmission format which is suitable for transmission.

The conventional technology having above-described construction will now be described in detail with reference to accompanying drawings.

The encoder 101 performs error-correction-encoding of the input bit column X(t), and generates the code word bit from the error-correction-coded input bit column

The switching unit 102 performs switching of the code word bits generated in the encoder 101 sequentially. Herein, the code word bit Y(t) to be performed the switching is constructed with $y_0$, $y_1$, $y_{N-2}$, $y_{N-1}$ bits. After that, the switching unit 102 inputs the switching code word bits from left side of a 1st row of the block interleaver 103 to right side, when the 1st row is inputted all, a 2nd row is inputted, when the 2nd row is inputted all, a 3rd row is inputted, it is repeated up to the last row

When the code word bits are all inputted to the block interleaver 103, the interleaver 103 outputs first the data bits included in the 1st column from up to down, when the data bits are outputted all, the data bits included in the 2nd column are outputted from up to down, when the data bits are outputted all, the data bits included in the 3 column are outputted from up to down, it is repeated up to the last column Fi. The outputted code word bit Y'(t) is constructed with $y_0$. $y_{Fi}$, $Y_{2Fi}$,..., $y_{(R-1)Fi}$, $y_1$, $y_{Fi+1}$,..., $y_{(R-1)Fi+1}$, $y_2$,..., $y_{Fi-1}$,..., $y_{RFi-1}$ bit columns.

Herein, the number of the column Fi of the block interleaver 103 is determined by transmission time interval TTI. For example, when TTI is 10 msec, Fi is set as 1, when TTI is 20msec, Fi is set as 2, when TTI is 40msec, Fi is set as 4, when TTI is 80msec, Fi is set as 8.

When TTI is 40msec(Fi=4), the radio frame segment processing unit 104 divides data bits of the block interleaver 103 so as to be total four radio frames in order to make R number of bits included in the each column of the clock interleaver 103 into one radio frame, and inputs the radio frames to the transmission matching unit 105. Herein, the one radio frame Z(t) inputted to the transmission rate matching unit 105 is constructed with $Z_1$, $Z_2$, $Z_{Fi.i}$, $Z_{Fi}$, code word bits, the code word bits $Z_i$(t) are constructed with $y_{(j-1)}$, $y_{Fi+(j-1)}$, $y_{2Fi+(j-1)}$, $y_{(R-2)Fi+(j-1)}$, $y_{(R-1)F1+(j-1)}$ bit columns.

And, the transmission rate matching unit 105 performs transmission rate matching about the data bits included in the radio frame in order to match the transmission format, and transmits it to the base station. Herein, the radio frame Z'(t) transmitted to the base station is constructed with $Z'_1, Z'_2, ..., Z'_{Fi-1}, Z'_{Fi}$ code word bits, the code word bits $Z'_j(t)$

is constructed with $Z_j^0, Z_j^1, ..., Z_j^{N'-1}, Z_j^{N'}$ bit columns.

When data bit is transmitted from the terminal to the base station, because the next generation mobile communication system having the conventional up-link format transmits the data bit as the each radio frame unit, the data bit transmitted by being included in the each column of the block interleaver 103 has to be distributed uniformly for the efficient transmission rate matching.

However, because the switching unit 102 inputs the code word bits of the encoder 101 to the block interleave 103 by switching them only sequentially, the biased data bit problem occurs. Particularly, when the number of the error-correction-coded code word bit n and the number of the column of the block interleaver Fi are not coprime, the above-mentioned problem occurs.

US 5898698 discloses an interleaver for interleaving codewords. It tries to use equal sized codewords, but if that is not possible, unequal sized codewords are used, along with dummy symbols.

## SUMMARY OF THE INVENTION

According to an aspect of the invention, there is provided an apparatus according to claim 1 or 2, and a method according to claim 11 or 12.

In addressing the problems of the related prior art it would be desirable to provide a transmission rate matching apparatus and a method thereof for a next generation mobile communication system for distributing biased data bits included in each column of a block interleaver uniformly by converting output sequence of code word bits crossly and inputting them to the block interleaver when the code word bits occurred in an error-correction-encoding process are interleaved in the block interleaver.

It would also be desirable to provide a transmission rate matching apparatus and a method thereof for a next generation mobile communication system which is capable of distributing the biased data bits outputted from the block interleaver uniformly by inputting an imaginary bit to the block interleaver when the transmission rate matching is performed about each column of the block interleaver after interleaving the code word bits occurred in the error-correction-encoding process in the block interleaver.

It would also be desirable to provide a transmission rate matching apparatus and a method thereof for a next generation mobile communication system which is capable of reducing the quantity of a memory buffer by comprising a block interleaver having the memory buffer and an address counter and making not to perform a count operation in an imaginary bit input in order to solve the above-mentioned problem which requires bigger quantity of the memory buffer than an actual needed memory buffer due to inputting the imaginary bit to the block interleaver.

Accordingly, a transmission rate matching apparatus for the next generation mobile communication system in accordance with an embodiment of the present invention comprises an encoder for performing error-correction-encoding of an input bit column, generating and outputting a code word bit from the error-correction-encoded input bit column, a block interleaver for being inputted the code word bit and interleaving it, a switching unit for performing a switching algorithm for distributing the biased data bits included in the each column of the block interleaver uniformly by converting an output order of the code word bit crossly and inputting them to the block interleaver, a radio frame segment processing unit for dividing the data bits into bit column of radio frame unit in order to make the data bits included in the each column of the block interleaver into one radio frame, and a transmission rate matching unit for matching the data bits included in the radio frame.

In addition, a transmission rate matching method for the next generation mobile communication system in accordance with an embodiment of the present invention comprises generating the code word bit from the error-correction-encoded input bit column, interleaving the code word bits after being inputted them, judging whether the number of the code word bit n of the encoder and the number of the column Fi of the block interleaver are coprime, converting the output sequence of the code word bits crossly in order to distribute the biased data bits included in the each column of the block interleaver uniformly when the number of the code word bit n of the encoder and the number of the column Fi of the block interleaver are not coprime, inputting the converted code word bits to the block interleaver, dividing the data bits into bit column of the radio frame unit in order to make the uniform data bits included in the each column of the block interleaver into one radio frame, and matching the data bits included in the radio frame.

Embodiments of the present invention will now be described. The present invention may be embodied in several forms without departing from the essential characteristics thereof.

BRIEF DESCRIPTION OF THE DRAWINGS

FIG.1 is a block diagram for a next generation mobile communication system having an up-link format for transmitting data from the conventional terminal to a base station.

FIG.2 is a block diagram illustrating a first embodiment of a transmission rate matching apparatus for a next generation mobile communication system in accordance with the present invention comprising an encoder having k/n code rate, a switching unit for converting sequentially according to a set switching algorithm, and a block interleaver.

FIG.3 illustrates a switching algorithm about the transmission rate matching method for the next generation mobile communication system in accordance with the present invention when the number of the code word bit n of the encoder and the number of the column Fi of the block interleaver are not coprime in FIG.2.

FIG.4 is a block diagram illustrating operation of the block interleaver and switching unit when the number of the code word bit n is 4 and the number of the column of the block interleaver Fi is 8 in FIG.2 and the switching algorithm of FIG.3 is adapted.

FIG.5 illustrates the other switching algorithm about the transmission rate matching method for the next generation mobile communication system in accordance with the present invention when the number of the code word bit n of the encoder and the number of the column Fi of the block interleaver are not coprime in FIG 2.

FIG.6 is a block diagram of a second embodiment profile about the transmission rate matching apparatus for the next generation mobile communication system adapting the switching algorithm of FIG.5.

FIG 7 illustrates the operation of the block interleaver when the number of the code word bit n is 4 and the number of the column of the block interleaver Fi is 8 and the switching algorithm of FIG.5 is adapted.

FIG.8 is a block diagram of a new block interleaver when an imaginary bit is inputted to the interleaver of FIG. 6.

FIG.9 is a detailed block diagram illustrating the transmission rate matching unit of FIG.4.

FIG.10 illustrates operation of the block interleaver and switching unit when the number of the code word bit n of the encoder is 2 and the number of the column Fi of the block interleaver is 8 and the switching algorithm of FIG.3 is adapted.

FIG.11 is a detailed block diagram illustrating a radio frame segment processing unit and transmission rate matching unit of FIG.10.

FIG.12 illustrates an algorithm for adjusting storing position of the actual interleaver for storing a bit column outputted from the imaginary interleaver in transmission matching algorithm process of FIG.9 and 11.

FIG.13 is a detailed block diagram illustrating storing position of the imaginary interleaver and actual interleaver performed the algorithm of FIG.12 when the number of the column Fi of the block interleaver is 8.

FIG.14 is a detailed block diagram illustrating an optimum column permutation pattern when the code word bits inputted to the block interleaver are outputted.

FIG. 15 is a construction profile illustrating the transmission matching apparatus for the next generation mobile communication system of a down-link for transmitting data from a base station to a terminal.

FIG.16 ~ FIG.30 are performance comparison graphs illustrating bit error rate (BER) and frame error rate (FER) when data is up-linked from the terminal to the base station by adapting the switching algorithm of FIG.3 and algorithm of FIG.13 or data is down-linked from the base station to the terminal as depicted in FIG.15.

DETAILED DESCRIPTION OF THE PREFERRED EMBODIMENT

A first embodiment of a transmission rate matching apparatus for a next generation mobile communication system in accordance with the present invention comprises an encoder 201 for performing error-correction- encoding of an input bit column, generating and outputting a code word bit from the error-correction-encoded input bit column, a block interleaver 203 for being inputted the code word bit and interleaving it, a switching unit 202 for performing a switching algorithm 206 for distributing the biased data bits included in the each column of the block interleaver 203 by converting an output order of the code word bit crossly and inputting them to the block interleaver 203 when code word bit number n of the encoder and column number $F_i$ of the block interleaver are not coprime, a radio frame segment processing unit 204 for dividing the data bits into bit column of radio frame unit in order to make the data bits included in the each column of the block interleaver 203 into one radio frame, and a transmission rate matching unit 205 for matching the data bits included in the radio frame.

The operation and effect of the first embodiment will now be described with reference to accompanying drawings.

In FIG.2, K number of input bit, namely, $X^1(t)$, $X^2(t)$, ∧, $X^k(t)$ are inputted to the encoder 201, the encoder 201 performs error-correction-encoding and outputs the error-correction-encoded n bit code word bit $Y^1(t)$, $Y^2(t)$, ^, $Y^n(t)$ Herein, the outputted code word bit $Y^1(t)$ are constructed with $y_0^i, y_1^i, \ldots, y_{N-2}^i, y_{N-1}^i$ bit columns And, the switching unit 202 converts the output sequence of the code word bits crossly by performing the switching algorithm 206 for distributing the code word bits uniformly in order to prevent the code word bit from being biased to the each column of the block interleaver, and inputs the converted code word bits to the block interleaver 203.

Herein, as depicted in FIG.3, the switching algorithm 206 judges whether the code word bit number n of the encoder 201 and column number Fi of the block interleaver 203 are coprime.

When the code word bit number n of the encoder 201 and column number Fi of the block interleaver 203 are coprime, the greatest common measure GCM of the code word bit number n and column number Fi of the block interleaver is 1. There is no coprime excluding it.

When the code word bit number n of the encoder 201 and column number Fi of the block interleaver 203 are coprime, the switching algorithm 206 yields a value $Y^k$ to be performed switching through a value k found by adding "1" to a value found by performing a modular operation (index % n) to the output sequence value (index) of the encoder 201 and code word bit number n And, the switching unit 202 performs switching of the yielded value, and inputs it to the block interleaver 203. The above-described operation is performed repeatedly up to the total bit number (index_Limit) of the error-correction-encoded bit outputted from the encoder 201.

On the contrary, when they are not coprime, the switching algorithm 206 yields a switching value $Y^k$ through a value k found by performing the modular operation (index % n) to the output sequence value (index) of the encoder 201 and code word bit number n, adding integer value m again, and adding 1 to a value found by performing the modular operation again to the added value m and code word bit number n. The yielded value is inputted to the block interleaver 203 after being performed switching.

When the value yielded by multiplying the code word bit number n to the column number Fi of the block interleaver and the value yielded by performing the modular operation (index % (n×Fi)) to the output order value (index) of the encoder are 0, the switching algorithm 206 makes the integer value (m) as 0. When the yielded value is not 0 and the value found by performing the modular operation of (index % LCM(n, Fi)) is 0, the switching algorithm adjusts the integer value (m) by adding "1" to the integer value (m).

When the switching algorithm 206 is performed, the code word bits outputted from the encoder 201 are crossly inputted to the block interleaver 203 Herein, the code word bits $Y^1(t)$ outputted from the encoder are constructed with

$y_0^i, y_1^i, \ldots, y_{N-2}^i, y_{N-1}^i$ bit columns.

Accordingly, the switching algorithm of FIG.3 is adapted when the code word bit number n outputted from the encoder 201 of FIG.2 is 4 and the column number Fi of the block interleaver is 8, as depicted in FIG.4, the code word bits are crossly inputted to the block interleaver 203 in order of ($y^1$, $y^2$, $y^3$, $y^4$), ($y^2$, $y^3$, $y^4$, $y^1$), ($y^3$, $y^4$, $y^1$, $y^2$), ($y^4$, $y^1$, $y^2$, $y^3$).

In addition, FIG.10 illustrates operation of the block interleaver and switching unit when the code word bit number n of the encoder is 2 and column number Fi of the block interleaver is 8 and the switching algorithm of FIG 3 is adapted.

Accordingly, the switching algorithm of FIG.3 is adapted when the code word bit number n outputted from the encoder 201 of FIG.2 is 4 and the column number Fi of the block interleaver is 8, as depicted in FIG 10 the code word bits are crossly inputted to the block interleaver 203 in order of ($y^1$, $y^2$), ($y^2$, $y^1$).

Accordingly, the bits included in the each column of the block interleaver 203, namely, the bits included in $Y^1$ (t), $Y^2$(t). $Y^3$(t). $Y^4$(t) are not biased but distributed uniformly.

Herein, the input/output sequence of the block interleaver 203 is same with the input/output sequence of the block interleaver 103.

The radio frame segment processing unit 204 divides the R number of bits outputted from the block interleaver 203 so as to be one radio frame, and generates radio frames as many as the column number Fi set in advance by the transmission time interval TTI.

When the radio frame generated by the radio frame segment processing unit 204 is inputted to the transmission rate matching unit 206, the transmission rate matching unit 206 performs the general transmission rate matching as the radio frame unit. After that, the bits after the transmission rate matching are transmitted to the base station.

When the switching algorithm of FIG.3 is embodied in the other embodiment of the present invention, the switching unit is not required essentially In other words, when the input sequence of the bits inputted to the block interleaver 203 is same with the sequence of the switching algorithm of FIG.3, the biased data bits included in the each column of the block interleaver 203 can be distributed uniformly by any embodiment without being limited by the first embodiment.

The second embodiment of the transmission rate matching apparatus and the method thereof for the next generation mobile communication system in accordance with the present invention comprises the encoder 201 or block interleaver 203 or radio frame segment processing unit 204 or transmission rate matching unit 205 for performing the operation same with the encoder 101 of the first embodiment, and a switching unit 202 for performing a switching algorithm 206 for distributing the biased data bits included in the each column of the block interleaver 203 uniformly by switching the output bits outputted from the encoder sequentially, switching the imaginary bit, and inserting it into the block interleaver when code word bit number n of the encoder and column number Fi of the block interleaver are not coprime.

The operation and effect of the second embodiment of the present invention will now be described with reference to accompanying drawings.

As depicted in FIG.5 and FIG.6, when the code word bit number n of the encoder and column number Fi of the block interleaver are coprime, the operation of the switching algorithm 206 of FIG.3 and FIG.4 is same with the first embodiment, when they are not coprime, the switching unit 202 inputs the code word bit outputted from the encoder 201 to the block interleaver 203 after switching them, and inserts the imaginary bit $y^c$ to the block interleaver 203 after switching it.

In other words, the switching unit 202 performs switching of the code word bits outputted from the encoder 201 in order of $Y^1(t)$, $Y^2(t)$,...., $Y^n(t)$, and performs switching of the imaginary bit $y^c$. In other words, the switching unit 202 performs switching of the output of the encoder 201 and imaginary bit $y^c$ repeatedly in order of $Y^1(t)$, $Y^2(t)$,..., $Y^n(t)$, $Y^c$, and inputs them to the block interleaver 203

Accordingly, when the switching algorithm of FIG.5 is adapted and the code word bit number n outputted from the encoder 201 of FIG 6 is 4 and column number Fi of the block interleaver 203 is 8, as depicted in FIG.7, the code word bits are inputted to the block interleaver 203 in order of ($y^1$, $y^2$, $y^3$, $y^4$).

Accordingly, as depicted in FIG.6, the bits included in the each column of the block interleaver 203, namely, the bits included in $Y^1(t)$, $Y^2(t)$, $Y^3(t)$, $Y^4(t)$ are distributed uniformly without being biased.

The input order of the code word bits to the block interleaver 203 is same with the first embodiment of the present invention.

When the switching algorithm of FIG.5 is embodied in the other system, there is no need to use the switching unit necessarily. In other words, when the sequence of the input bits inputted to the block interleaver 203 is same with the sequence of the switching algorithm of FIG.5, the biased data bits included in the each column of the block interleaver 203 can be distributed uniformly by any embodiment without being limited by the second embodiment

Accordingly, in the embodiments of the transmission rate matching apparatus and the method thereof for the next generation mobile communication system in accordance with the present invention, the switching unit 202 performs the switching by using the switching algorithm depicted in FIG.3 or FIG.5, accordingly the code word bits outputted from the encoder 201 can be distributed uniformly without being biased to the block interleaver 203.

However, as depicted in FIG.7, when the imaginary bit $y^c$ is inserted into the block interleaver 203, a memory buffer of the block interleaver 203 requires a lot more quantity of buffer than an actual needed memory buffer

The structure of the memory buffer of the interleaver for solving the above-described problem is depicted in FIG.8.

In FIG.8, P12-Ci is an address counter for ith column, and P12-i is a memory buffer for ith column.

As differentiated from the block interleaver 103 of FIG.2, the block interleaver 203 comprises the memory buffer having each independent column, and an address counter corresponding to the each column of the memory buffer.

In addition, the input sequence of the code word bits to the block interleaver 203 is same with the sequence of the block interleaver 103 of FIG.1, as depicted in FIG.8, when the code word bits ($y^1$, $y^2$, $y^3$, $y^4$) outputted from the encoder 201 are inputted to the memory buffers P12-1, P12-2, P12-3, P12-4, the address counters P12-C1, P12-C2, P12-C3, P12-C4 count, when the imaginary bit $y^c$ is inputted to the memory buffer P12-5, the address counter P12-C5 does not count. And, when the code word bits excluding the imaginary bit $y^c$ are inputted to the next memory buffer, the address counters count again. In addition, when the imaginary bit $y^c$ is inputted, the memory buffer P12-5 does not store the imaginary bit, when the code word bit is inputted, the memory buffer P12-5 stores the code word bit.

Finally, the inputted code word bit is outputted to the radio frame segment processing unit as the column direction.

In the embodiments of the present invention, the column permutation for altering the order between the each column of the block interleaver 203 is performed in order to improve the efficiency of the block interleaver 203 before the code word bits inputted to the block interleaver 203 are outputted to the radio frame segment processing unit.

FIG. 14 illustrates efficient column permutation in use of the switching algorithm of FIG.3 when the code word bit number n outputted from the encoder is 2 and column number Fi of the block interleaver is 8.

Herein, 0,3,2,1,6,5,4,7 mean the sequence of column permutation. In other words, as depicted in FIG.14, when the code word bits stored in the block interleaver 203a are outputted to the radio frame processing unit 204, the code word bits on 0th column are outputted first, the code word bits on the next 3rd column are outputted, as same as the order of the block interleaver 203b, the code word bits are outputted from the radio program segment processing unit 204.

When the block interleaver 203 performs the column permutation of the code word bits and outputs them, the radio frame segment processing unit 204 is inputted the outputted code word bits, converts them into the radio frame unit, and transmits them to the transmission rate matching unit 205.

And, as depicted in FIG.9 or FIG.11, a bit divider 205a of the transmission rate matching unit 205 of the embodiments of the present invention divides the data bits inside of the radio frame inputted from the radio frame segment processing unit 204 by kinds.

Herein, the output $y'_{jk}$ of the bit divider 205a means kth bit among the bits corresponding to $y^t$ (t) of jth radio frame.

Each matching by the transmission rate matching algorithm is performed to the data bits divided by kinds. And, a bit collection unit 205b is inputted the outputted bits $y^{i'}_{jk}$, restores them in order of input of the bit divider 205b, forms one radio frame again, and outputs it.

Meanwhile, the transmission rate matching algorithm of FIG.10 and FIG.11 shows an optimum performance when it is performed on the imaginary interleaver for the data bits divided by the bit divider 205a, In addition, it is possible to perform the optimum transmission rate matching without increase of hardware complexity by using the imaginary interleaver.

Accordingly, as depicted in FIG.13, the data bits by kinds are stored in the imaginary interleavers 501, 502, the transmission rate matching about the stored data bits is performed, and they are inputted again to the bit collection unit 205b

And, the bit collection unit 205b receives data bits by kinds through the transmission rate matching process by using the imaginary interleaver constructed with a algorithm of FIG.12, the bit collection unit 205b is outputted by forming the radio frame again.

In FIG 12, i is column number of the imaginary interleaver, j is column number of the actual interleaver, when $y^1$ bit is inputted, b is defined as 2, when $y^2$ bit is inputted, b is defined as 1, Fi is column number of the actual interleaver, it is determined as 2, 4, 8.

For example, when $y^1_2$ bit stored in C_2 of the imaginary interleaver 501 is inputted, store position j in the actual interleaver 503 can be found as below with the algorithm of FIG.12.

Because $y^1_2$ is on the second column, it means i = 2 and bit of $y^1$, the interleaver is 8 bit, it means Fi=8. Accordingly, it is adapted to j = (2 × i+(b-2 × *i Fi*)%2)%Fi, it is j=(2 × 2+(2-2 × 2/8)%2)%8

Herein, 0.5 is found by calculating (2×2/8), 0 is found by throwing away the prime number, 0 is found by performing the 2%2 modular operation. Accordingly, 4 is yielded by performing 4%8 modular operation. And, the value 4 is stored in C_4 position of the actual interleaver 503. And, when $y^2_3$ bit stored on C'_3 of the imaginary interleaver 502 is inputted, the store position in the actual interleaver 503 is yield as below through the algorithm of FIG 12

$y^2_3$ is on the third column, it means i = 3 and $y^2$ bit and b=1, and the interleaver is 8bit, it means Fi=8.

Accordingly, when it is adapted to j = (2 × i+(b-[2 × *i*/*Fi*])%2)%Fi, it is j=(2 × 3+(1-[2 × 3/8])%2)%8.

Herein, 0.75 is found by calculating (2 × 3/8), 0 is found by throwing away the prime number, 1 is found by performing the 1%2 modular operation. Accordingly, 7 is yielded by performing 7%8 modular operation.

The yielded value 7 means the column number of the actual interleaver 503, namely, C_7 position.

When the data bits are separately inputted from the imaginary interleavers 501, 502 depicted in FIG.13 with the above-described method, the bit collection unit 205b stores them on the position of the actual interleaver 503 by using the algorithm of the FIG.12, and outputs the stored data bits as column direction.

Meanwhile, as depicted in FIG.15, the efficient transmission sequence of the down-link communication system is in order of the encoder 201, transmission rate matching unit 205, block interleaver 203, and radio frame segment processing unit 204.

The graphs comparing the each performance in the data down-link from the base station to the terminal and data up-link from the terminal to the base station will now be described as below.

First, as depicted in FIG.16 ~ FIG 30, the each experiment value, namely, "Up" means the transmission state from the terminal to the base station, "Down" means the data transmission state from the base station to the terminal, "It" means the times of the repeated decoding process, "TTI" means the transmission time interval, "RMI" means the transmission matching rate, "BER" means the bit error rate, and "FER" means the frame error rate. Herein, FIG.16 ~ 25 illustrate experiments performed by using a serial chain convolution encoder to the encoder of the up-link system of FIG. 1 and encoder of the down-link system of FIG.15, the graphs show comparison of the performance yielded by the experiments using the switching algorithm of FIG.3. In addition, FIG. 16 ~ FIG.20 illustrate experiment result when input bit number per one data block is 322 and size of the block interleaver is 486.

FIG.21 ~ FIG.25 illustrate performance comparison graphs yielded by the experiments using the algorithm of FIG.3, they illustrate the experiment result when input bit number per one data block is 322 and size of the block interleaver is 489.

FIG.26 ~ FIG.30 are graphs illustrating experiments performed by using the serial chain convolution encoder to the encoder of the up-link system of FIG.1, the graphs compares the performance yielded by the experiments using the switching algorithm of FIG.5. Herein, FIG.26 and FIG.27 illustrate the experiment result when input bit number per one data block is 324 and size of the block interleaver is 489. In addition, FIG.28 ~ FIG.30 illustrate the experiment result when input bit number per one data block is 322 and size of the block interleaver is 486.

In result, the bit error rate BER as the upper limit and the frame error rate FER as the lower limit are described almost same in the all graphs of FIG.16 ~ FIG.30.

As described above, when the transmission matching process is performed after interleaving the code word generated in the error-correction-encoding process through the block interleaver, embodiments of the invention can perform efficient transmission rate matching by distributing the data bits included in each column of the block interleaver uniformly.

In addition, embodiments of the invention can improve performance in the bit error rate and frame error rate without the hardware-like complexity added in the system.

Embodiments of the invention are also efficient in transmission power or system performance or user quantity aspect by the performance improvement.

In addition, the present invention can be adapted to any system for distributing the data bits included in the each column of the block interleaver uniformly.

## Claims

1. A transmission rate matching apparatus for a mobile communication system, comprising:

    an encoder (201) for performing error-correction-encoding of a number of input bits to generate a number *n* of error-correction-encoded code words, each code word having respective code word bits;
    a block interleaver (203) arranged to receive code word bits, to store the received code word bits as rows, and to output stored code word bits as columns, the block interleaver having *Fi* columns;
    a switching unit (202) for performing a switching algorithm (206) adapted to receive the code words output by the encoder and output the code word bits in a non-sequential order to the block interleave to distribute the code word bits uniformly in the block interleaver such that, for each code word, the respective code word bits are not biased towards a column of the block interleaver when *n* and *Fi* are not coprime;
    a radio frame segment processing unit (204) for generating a radio frame after receiving a column output from the block interleaver; and
    a transmission rate matching unit (205) for matching the data bits included in the radio frame to a transmission format suitable for a transmission between a terminal and a base station, and transmitting them.

2. A transmission rate matching apparatus for a mobile communication system, comprising:

    an encoder (201) for performing error-correction-encoding of a number of input bits to generate a number n of error-correction-encoded code words, each code word having respective code word bits;
    a block interleaver (203) arranged to receive code word bits, to store the received code word bits as rows, and to output the stored code word bits as columns, the block interleaver having *Fi* columns;
    a switching unit (202) for performing a switching algorithm (206) adapted to receive the code words output by the encoder and output the code word bits and additional bits to the block interleaver in an order to distribute the code word bits uniformly in the block interleaver such that, for each code word, the respective code word bits are not biased towards a column of the block interleaver when *n* and *Fi* are not coprime;
    a radio frame segment processing unit (204) for generating a radio frame after receiving a column output from the block interleaver; and
    a transmission rate matching unit (205) for matching the data bits included in the radio frame to a transmission format suitable for a transmission between a terminal and a base station and transmitting them.

3. The transmission rate matching apparatus for the mobile communication system according to claim 2, wherein the block interleaver comprises an address counter which does not count when an additional bit is inputted to a memory buffer for solving lack of memory space of the block interleaver due to the additional bit included in the output of the block interleaver, and counts when a signal excluding an additional bit is inputted.

4. The transmission rate matching apparatus for the mobile communication system according to claim 1, wherein the block interleaver performs a column permutation for altering a sequence of columns of the block interleaver for outputting the stored code word bits as columns.

**5.** The transmission rate matching apparatus for the mobile communication system according to claim 2, wherein the block interleaver performs a column permutation for altering sequence of the each column before outputting the data bits.

**6.** The transmission rate matching apparatus for the mobile communication system according to claim 1, wherein the block interleaver outputs the code word bits by permuting the sequence of each column in the order of 0th column code word bits output, 3rd column code word bits output, 2nd column code word bits output, 1st column code word bits output, 6th column code word bits output, 5th column code word bits output, 4th column code word bits output, 7th column code word bits output.

**7.** The transmission rate matching apparatus for the mobile communication system according to claim 2, wherein the block interleaver outputs the code word bits by permuting the sequence of each column in the order of 0th column code word bits output, 3rd column code word bits output, 2nd column code word bits output, 1 st column code word bits output, 6th column code word bits output, 5th column code word bits output, 4th column code word bits output, 7th column code word bits output.

**8.** The transmission rate matching apparatus for the mobile communication system according to claim 1 or 2, wherein the transmission rate matching unit comprises a bit divider for dividing the code word bits inputted as the radio frame according to the respective code word for the code word bits.

**9.** The transmission rate matching apparatus for the mobile communication system according to claim 8, wherein the transmission rate matching unit performs transmission rate matching separately for the code word bits divided for a code word and wherein the transmission rate matching unit comprises a bit collection unit for restoring and outputting the transmission rate matched bits in order of input of the bits to the bit divider.

**10.** A transmission rate matching method for a mobile communication system, comprising:

performing error-correction-encoding of a number of input bits to generate a number n of error-correction-encoded code words, each code word having respective code word bits;
storing the code word bits as rows of a block interleaver (203), and outputting the stored code word bits as columns of the block interleaver, the block interleaver having *Fi* columns;
performing a switching algorithm (206) to receive the error correction encoded code words and output the code word bits in a non-sequential order to the block interleaver to distribute code word bits uniformly such that, for each code word, the respective code word bits are not biased towards a column of the block interleaver when *n* and *Fi* are not coprime;
generating a radio frame from a column output from the block interleaver; and
matching the data bits included in the radio frame to a transmission format suitable for a transmission between a terminal and a base station, and transmitting them.

**11.** A transmission rate matching method for a mobile communication system, comprising:

performing error-correction-encoding of a number of input bits to generate a number *n* of error-correction-encoded code words, each code word having respective code word bits;
storing the code word bits as rows of a block interleaver (203), and outputting the stored code word bits as columns of the block interleaver, the block interleaver having *Fi* columns;
performing a switching algorithm (206) to receive the error correction encoded code words and output the code word bits and additional bits to the block interleaver in an order to distribute code word bits uniformly such that, for each code word, the respective code word bits are not biased towards a column of the block interleaver when *n* and *Fi* are not coprime;
generating radio frames from a column output from the block interleaver; and
matching the data bits included in the radio frame as a transmission format suitable for a transmission between a terminal and a base station and transmitting them.

**12.** The transmission rate matching method for the mobile communication system according to claim 11, wherein outputting the code word bits and additional bits to the block interleaver comprises the steps of:

storing the code word bits as many as the number of columns; and
judging a counting operation in accordance with the input of an additional bit to the memory buffer for solving lack of the memory space of the block interleaver due to the additional bit included in the output of the block interleaver.

**13.** The transmission rate matching method for the mobile communication system according to claim 10 or 11, wherein the step of matching and transmitting the data bits comprises the step of:

dividing the code word bits inputted as the radio frame according to the respective code word for the code word bits.

**14.** The transmission rate matching method for the mobile communication system according to claim 13, wherein the step of matching and transmitting the data bits comprises the steps of:

performing transmission rate matching separately for the code word bits divided for a code word; and
restoring and storing the transmission rate matched bits in the order of the input of the bits to the bit divider.

**15.** The transmission rate matching method for the mobile communication system according to claim 14, wherein an inputting step which inputs the outputted bit column determines the position of the bit column *j* inputted to the dividing step in accordance with below equation.

$$j = (2 \times i + (b - \lfloor 2 \times i / Fi \rfloor)\%2)\%Fi$$

herein, % is a modulo operator, i is the number of the column of the interleaver, and b is constant determined in accordance with the kind of bit.

## Patentansprüche

**1.** Übertragungsratenanpassungsvorrichtung für ein Mobilkommunikationssystem, umfassend:

einen Codierer (201) zur Durchführung einer Fehlerkorrekturcodierung einer Anzahl von Eingangsbits, um eine Zahl n von fehlerkorrekturcodierten Codewörtern zu erzeugen, wobei jedes Codewort entsprechende Codewortbits aufweist;
einen Blockumordner (203), der so ausgeführt ist, dass er Codewortbits empfängt, um die empfangenen Codewortbits als Zeilen zu speichern, und um die gespeicherten Codewortbits als Spalten auszugeben, wobei der Blockumordner Fi Spalten aufweist;
eine Schalteinheit (202) zum Ausführen eines Schaltalgorithmus (206), der dafür ausgelegt ist, die vom Codierer ausgegebenen Codewörter zu empfangen und die Codewortbits in einer nicht-sequentiellen Reihenfolge an den Blockumordner auszugeben, um die Codewortbits gleichmaßig im Blockumordner zu verteilen, so dass für jedes Codewort die entsprechenden Codewortbits nicht in Richtung zu einer Spalte des Blockumordners unausgewogen sind, wenn n und Fi nicht teilerfremd sind;
eine Funkrahmensegment-Verarbeitungseinheit (204) zum Erzeugen eines Funkrahmens nach dem Empfangen einer vom Blockumordner ausgegebenen Spalte; und
eine Übertragungsratenanpassungseinheit (205) zum Anpassen der im Funkrahmen enthaltenen Datenbits an ein Übertragungsformat, das für eine Übertragung zwischen einem Endgerät und einer Basisstation geeignet ist, und zum Übertragen derselben.

**2.** Übertragungsratenanpassungsvorrichtung für ein Mobilkommunikationssystem, umfassend:

einen Codierer (201) zur Durchführung einer Fehlerkorrekturcodierung einer Anzahl von Eingangsbits, um eine Zahl n von fehlerkorrekturcodierten Codewörtern zu erzeugen, wobei jedes Codewort entsprechende Codewortbits aufweist;
einen Blockumordner (203), der so ausgeführt ist, dass er Codewortbits empfängt, um die empfangenen Codewortbits als Zeilen zu speichern, und um die gespeicherten Codewortbits als Spalten auszugeben, wobei der Blockumordner Fi Spalten aufweist;

eine Schalteinheit (202) zum Ausführen eines Schaltalgorithmus (206), der dafür ausgelegt ist, die vom Codierer ausgegebenen Codewörter zu empfangen und die Codewortbits und zusätzliche Bits an den Blockumordner in einer Reihenfolge zum gleichmäßigen Verteilen der Codewortbits im Blockumordner auszugeben, dass so dass für jedes Codewort die entsprechenden Codewortbits nicht in Richtung zu einer Spalte des Blockumordners unausgewogen sind, wenn n und Fi nicht teilerfremd sind;
eine Funkrahmensegment-Verarbeitungseinheit (204) zum Erzeugen eines Funkrahmens nach dem Empfangen einer vom Blockumordner ausgegebenen Spalte; und
eine Übertragungsratenanpassungseinheit (205) zum Anpassen der im Funkrahmen enthaltenen Datenbits an ein Übertragungsformat, das für eine Übertragung zwischen einem Endgerät und einer Basisstation geeignet ist, und zum Übertragen derselben.

**3.** Übertragungsratenanpassungsvorrichtung für ein Mobilkommunikationssystem nach Anspruch 2, wobei der Blockumordner einen Adresszähler umfasst, der nicht zählt, wenn ein zusätzliches Bit in einen Speicherpuffer eingegeben wird, um einen Speicherplatzmangel des Blockumordners aufgrund des in der Ausgabe des Blockumordners enthaltenen zusätzlichen Bits zu beheben, und zählt, wenn ein Signal eingegeben wird, das ein zusätzliches Bit ausschließt.

**4.** Übertragungsratenanpassungsvorrichtung für ein Mobilkommunikationssystem nach Anspruch 1, wobei der Blockumordner eine Spaltenpermutation ausführt, um eine Spaltensequenz des Blockumordners für die Ausgabe der gespeicherten Codewortbits als Spalten zu ändern.

**5.** Übertragungsratenanpassungsvorrichtung für ein Mobilkommunikationssystem nach Anspruch 2, wobei der Blockumordner eine Spaltenpermutation durchführt, um eine Sequenz der jeweiligen Spalte vor der Ausgabe der Datenbits zu ändern.

**6.** Übertragungsratenanpassungsvorrichtung für ein Mobilkommunikationssystem nach Anspruch 1, wobei der Blockumordner Codewortbits durch Permutieren der Sequenz jeder Spalte in der Reihenfolge der nullten Spaltencodewortbitsausgabe, der dritten Spaltencodewortbitsausgabe, der zweiten Spaltencodewortbitsausgabe, der ersten Spaltencodewortbitsausgabe, der sechsten Spaltencodewortbitsausgabe, der fünften Spaltencodewortbitsausgabe, der vierten Spaltencodewortbitsausgabe und der siebten Spaltencodewortbitsausgabe ausgibt.

**7.** Übertragungsratenanpassungsvorrichtung für ein Mobilkommunikationssystem nach Anspruch 2, wobei der Blockumordner Codewortbits durch Permutieren der Sequenz jeder Spalte in der Reihenfolge der nullten Spaltencodewortbitsausgabe, der dritten Spaltencodewortbitsausgabe, der zweiten Spaltencodewortbitsausgabe, der ersten Spaltencodewortbitsausgabe, der sechsten Spaltencodewortbitsausgabe, der fünften Spaltencodewortbitsausgabe, der vierten Spaltencodewortbitsausgabe und der siebten Spaltencodewortbitsausgabe ausgibt.

**8.** Übertragungsratenanpassungsvorrichtung für ein Mobilkommunikationssystem nach Anspruch 1 oder 2, wobei die Übertragungsratenanpassungseinheit einen Bitteiler umfasst zum Unterteilen der Codewortbits, die als Funkrahmen eingegeben werden, entsprechend dem jeweiligen Codewort für die Codewortbits.

**9.** Übertragungsratenanpassungsvorrichtung für ein Mobilkommunikationssystem nach Anspruch 8, wobei die Übertragungsratenanpassungseinheit eine Übertragungsratenanpassung separat für die Codewortbits durchführt, die für ein Codewort unterteilt worden sind, und wobei die Übertragungsratenanpassungseinheit eine Bitsammeleinheit umfasst zum Wiederherstellen und Ausgeben der übertragungsraten-angepassten Bits in der Reihenfolge der Eingabe der Bits in den Bitteiler.

**10.** Übertragungsratenanpassungsverfahren für ein Mobilkommunikationssystem, umfassend:

Durchführen einer Fehlerkorrekturcodierung einer Anzahl von Eingangsbits, um eine Zahl n von fehlerkorrekturcodierten Codewörtern zu erzeugen, wobei jedes Codewort entsprechende Codewortbits aufweist;
Speichern der Codewortbits als Zeilen eines Blockumordners (203) und Ausgeben der gespeicherten Codewortbits als Spalten des Blockumordners, wobei der Blockumordner Fi Spalten aufweist;
Ausführen eines Schaltalgorithmus (206) zum Empfangen der fehlerkorrekturcodierten Codewörter und zum Ausgeben der Codewortbits in einer nicht-sequentiellen Reihenfolge an den Blockumordner, um die Codewortbits gleichmäßig zu verteilen, so dass für jedes Codewort die entsprechenden Codewortbits nicht in Richtung zu einer Spalte des Blockumordners unausgewogen sind, wenn n und Fi nicht teilerfremd sind;
Erzeugen eines Funkrahmens aus einer vom Blockumordner ausgegebenen Spalte; und

Anpassen der im Funkrahmen enthaltenen Datenbits an ein Übertragungsformat, das für eine Übertragung zwischen einem Endgerät und einer Basisstation geeignet ist, und Übertragen derselben.

**11.** Übertragungsratenanpassungsverfahren für ein Mobilkommunikationssystem, umfassend:

Durchführen einer Fehlerkorrekturcodierung einer Anzahl von Eingangsbits, um eine Zahl n von fehlerkorrekturcodierten Codewörtern zu erzeugen, wobei jedes Codewort entsprechende Codewortbits aufweist;
Speichern der Codewortbits als Zeilen eines Blockumordners (203) und Ausgeben der gespeicherten Codewortbits als Spalten des Blockumordners, wobei der Blockumordner Fi Spalten aufweist;
Ausführen eines Schaltalgorithmus (206) zum Empfangen der fehlerkorrekturcodierten Codewörter und zum Ausgeben der Codewortbits und zusätzlicher Bits an den Blockumordner in einer Reihenfolge zum gleichmäßigen Verteilen der Codewortbits, so dass für jedes Codewort die entsprechenden Codewortbits nicht in Richtung zu einer Spalte des Blockumordners unausgewogen sind, wenn n und Fi nicht teilerfremd sind;
Erzeugen eines Funkrahmens aus einer vom Blockumordner ausgegebenen Spalte; und
Anpassen der im Funkrahmen enthaltenen Datenbits an ein Übertragungsformat, das für eine Übertragung zwischen einem Endgerät und einer Basisstation geeignet ist, und Übertragen derselben.

**12.** Übertragungsratenanpassungsverfahren für ein Mobilkommunikationssystem nach Anspruch 11, wobei das Ausgeben der Codewortbits und der zusätzlichen Bits an den Blockumordner die Schritte umfasst:

Speichern der Codewortbits in einer Anzahl entsprechend der Anzahl der Spalten; und
Beurteilen einer Zähloperation entsprechend der Eingabe eines zusätzlichen Bits in den Speicherpuffer, um einen Speicherplatzmangel des Blockumordners aufgrund des in der Ausgabe des Blockumordners enthaltenen zusätzlichen Bits zu beheben.

**13.** Übertragungsratenanpassungsverfahren für ein Mobilkommunikationssystem nach Anspruch 10 oder 11, wobei der Schritt des Anpassens und Sendens der Datenbits den Schritt umfasst:

Unterteilen der als Funkrahmen eingegebenen Codewortbits entsprechend dem jeweiligen Codewort für die Codewortbits.

**14.** Übertragungsratenanpassungsverfahren für ein Mobilkommunikationssystem nach Anspruch 13, wobei der Schritt des Anpassens und Sendens der Datenbits den Schritt umfasst:

Ausführen einer Übertragungsratenanpassung separat für die für ein Codewort unterteilten Codewortbits; und
Wiederherstellen und Speichern der übertragungsraten-angepassten Bits in der Reihenfolge der Eingabe der Bits in den Bitteiler.

**15.** Übertragungsratenanpassungsverfahren für ein Mobilkommunikationssystem nach Anspruch 14, wobei ein Eingabeschritt, der die ausgegebene Bitspalte eingibt, die Position der in den Teilungsschritt eingegebenen Bitspalte entsprechend der folgenden Gleichung bestimmt:

$$j = (2 \times i + (b - \lfloor 2 \times i / Fi \rfloor) \% 2) \% Fi$$

wobei % ein Modulo-Operator ist, i die Nummer der Spalte des Umordners ist, und b eine Konstante ist, die entsprechend der Art des Bits bestimmt wird.

## Revendications

**1.** Dispositif d'adaptation de vitesse de transmission pour un système de communication mobile, comprenant :

un codeur (201) pour effectuer un codage de correction d'erreur d'un certain nombre de bits d'entrée afin de générer un nombre n de mots de code codés par correction d'erreur, chaque mot de code comportant des bits de mot de code respectifs ;

un entrelaceur de blocs (203) configuré de façon à recevoir des bits de mot de code, à mémoriser les bits de mot de code reçus sous la forme de rangées, et à délivrer en sortie des bits de mot de code mémorisés sous la forme de colonnes, l'entrelaceur de blocs comportant *Fi* colonnes ;
une unité de commutation (202) pour effectuer un algorithme de commutation (206), adaptée pour recevoir les mots de code délivrés en sortie par le codeur et délivrer en sortie des bits de mot de code dans un ordre non séquentiel à l'entrelaceur de blocs de façon à distribuer les bits de mot de code uniformément dans l'entrelaceur de blocs, de telle sorte que, pour chaque mot de code, les bits de mots de code respectifs ne soient pas décalés vers une colonne de l'entrelaceur de blocs lorsque n et Fi ne sont pas coprimes ;
une unité de traitement de segments de trame de radio (204) pour générer une trame de radio après la réception d'une colonne délivrée en sortie de l'entrelaceur de blocs ; et
une unité d'adaptation de vitesse de transmission (205) pour adapter les bits de données inclus dans la trame de radio à un format de transmission approprié pour une transmission entre un terminal et une station de base, et transmettre ceux-ci.

**2.** Dispositif d'adaptation de vitesse de transmission pour un système de communication mobile, comprenant :

un codeur (201) pour effectuer un codage de correction d'erreur d'un certain nombre de bits d'entrée afin de générer un nombre n de mots de code de correction d'erreur, chaque mot de code comportant des bits de mot de code respectifs ;
un entrelaceur de blocs (203) configuré de façon à recevoir des bits de mot de code, à mémoriser les bits de mot de code reçus sous la forme de rangées, et à délivrer en sortie les bits de mot de code mémorisés sous la forme de colonnes, l'entrelaceur de blocs comportant Fi colonnes ;
une unité de commutation (202) pour effectuer un algorithme de commutation (206), adaptée pour recevoir les mots de code délivrés en sortie par le codeur et délivrer en sortie les bits de mot de code et des bits additionnels à l'entrelaceur de blocs dans un ordre permettant de distribuer les bits de mot de code uniformément dans l'entrelaceur de blocs, de telle sorte que, pour chaque mot de code, les bits de mots de code respectifs ne soient pas décalés vers une colonne de l'entrelaceur de blocs lorsque n et Fi ne sont pas coprimes ;
une unité de traitement de segments de trame de radio (204) pour générer une trame de radio après la réception d'une colonne délivrée en sortie de l'entrelaceur de blocs ; et
une unité d'adaptation de vitesse de transmission (205) pour adapter les bits de données inclus dans la trame de radio à un format de transmission approprié pour une transmission entre un terminal et une station de base, et transmettre ceux-ci.

**3.** Dispositif d'adaptation de vitesse de transmission pour le système de communication mobile selon la revendication 2, dans lequel l'entrelaceur de blocs comprend un compteur d'adresses qui ne compte pas lorsqu'un bit additionnel est entré dans une mémoire tampon pour résoudre le manque d'espace mémoire de l'entrelaceur de blocs dû au bit additionnel inclus dans la sortie de l'entrelaceur de blocs, et compte lorsqu'un signal excluant un bit additionnel est entré.

**4.** Dispositif d'adaptation de vitesse de transmission pour le système de communication mobile selon la revendication 1, dans lequel l'entrelaceur de blocs effectue une permutation de colonnes pour altérer une séquence de colonnes de l'entrelaceur de blocs pour délivrer en sortie les bits de mot de code mémorisés sous la forme de colonnes.

**5.** Dispositif d'adaptation de vitesse de transmission pour le système de communication mobile selon la revendication 2, dans lequel l'entrelaceur de blocs effectue une permutation de colonnes pour altérer la séquence de chaque colonne avant de délivrer en sortie les bits de données.

**6.** Dispositif d'adaptation de vitesse de transmission pour le système de communication mobile selon la revendication 1, dans lequel l'entrelaceur de blocs délivre en sortie les bits de mot de code en permutant la séquence de chaque colonne dans l'ordre sortie de bits de mot de code de $0^{ème}$ colonne, sortie de bits de mot de code de $3^{ème}$ colonne, sortie de bits de mot de code de $2^{ème}$ colonne, sortie de bits de mot de code de $1^{ère}$ colonne, sortie de bits de mot de code de $6^{ème}$ colonne, sortie de bits de mots de code de $5^{ème}$ colonne, sortie de bits de mot de code de $4^{ème}$ colonne, sortie de bits de mot de code de $7^{ème}$ colonne.

**7.** Dispositif d'adaptation de vitesse de transmission pour le système de communication mobile selon la revendication 2, dans lequel l'entrelaceur de blocs délivre en sortie les bits de mot de code en permutant la séquence de chaque colonne dans l'ordre sortie de bits de mot de code de $0^{ème}$ colonne, sortie de bits de mot de code de $3^{ème}$ colonne, sortie de bits de mot de code de $2^{ème}$ colonne, sortie de bits de mot de code de $1^{ère}$ colonne, sortie de bits de mot de code de 6$^{ème}$ colonne, sortie de bits de mots de code de 5$^{ème}$ colonne, sortie de bits de mot de code de 4$^{ème}$ colonne, sortie de bits de mot de code de 7$^{ème}$ colonne.

**8.** Dispositif d'adaptation de vitesse de transmission pour le système de communication mobile selon la revendication 1 ou 2, dans lequel l'unité d'adaptation de vitesse de transmission comprend un diviseur de bits pour diviser les bits de mot de code entrés sous la forme de la trame de radio en fonction du mot de code respectif pour les bits de mots de code.

**9.** Dispositif d'adaptation de vitesse de transmission pour le système de communication mobile selon la revendication 8, dans lequel l'unité d'adaptation de vitesse de transmission effectue une adaptation de vitesse de transmission séparément pour les bits de mot de code divisés pour un mot de code et dans lequel l'unité d'adaptation de vitesse de transmission comprend une unité de collecte de bits pour restaurer et délivrer en sortie les bits dont la vitesse de transmission a été adaptée dans l'ordre d'entrée des bits dans le diviseur de bits.

**10.** Procédé d'adaptation de vitesse de transmission pour un système de communication mobile, comprenant :

la réalisation d'un codage de correction d'erreur d'un certain nombre de bits d'entrée afin de générer un nombre n de mots de code codés par correction d'erreur, chaque mot de code comportant des bits de mot de code respectifs ;
la mémorisation des bits de mot de code reçus sous la forme de rangées d'un entrelaceur de blocs (203), et la délivrance en sortie des bits de mot de code mémorisés sous la forme de colonnes de l'entrelaceur de blocs, l'entrelaceur de blocs comportant Fi colonnes ;
la réalisation d'un algorithme de commutation (206) pour recevoir les mots de code codés par correction d'erreur et pour délivrer en sortie les bits de mot de code dans un ordre non séquentiel à l'entrelaceur de blocs de façon à distribuer les bits de mot de code uniformément, de telle sorte que, pour chaque mot de code, les bits de mots de code respectifs ne soient pas décalés vers une colonne de l'entrelaceur de blocs lorsque n et Fi ne sont pas coprimes ;
la génération d'une trame de radio à partir d'une colonne délivrée en sortie de l'entrelaceur de blocs ; et
l'adaptation des bits de données inclus dans la trame de radio à un format de transmission approprié pour une transmission entre un terminal et une station de base, et la transmission de ceux-ci.

**11.** Procédé d'adaptation de vitesse de transmission pour un système de communication mobile, comprenant :

la réalisation d'un codage de correction d'erreur d'un certain nombre de bits d'entrée afin de générer un nombre *n* de mots de code codés par correction d'erreur, chaque mot de code comportant des bits de mot de code respectifs ;
la mémorisation des bits de mot de code sous la forme de rangées d'un entrelaceur de blocs (203), et la délivrance en sortie des bits de mot de code mémorisés sous la forme de colonnes de l'entrelaceur de blocs, l'entrelaceur de blocs comportant Fi colonnes ;
la réalisation d'un algorithme de commutation (206) pour recevoir les mots de code codés par correction d'erreur et délivrer en sortie les bits de mot de code et des bits additionnels à l'entrelaceur de blocs dans un ordre permettant de distribuer les bits de mot de code uniformément, de telle sorte que, pour chaque mot de code, les bits de mots de code respectifs ne soient pas décalés vers une colonne de l'entrelaceur de blocs lorsque n et Fi ne sont pas coprimes ;
la génération de trames de radio à partir d'une colonne délivrée en sortie de l'entrelaceur de blocs ; et
l'adaptation des bits de données inclus dans la trame de radio à un format de transmission approprié pour une transmission entre un terminal et une station de base, et la transmission de ceux-ci.

**12.** Procédé d'adaptation de vitesse de transmission pour le système de communication mobile selon la revendication 11, dans lequel la délivrance en sortie des bits de mot de code et des bits additionnels à l'entrelaceur de blocs comprend les étapes consistant à :

mémoriser les bits de mot de code sous le même nombre que le nombre de colonnes ; et
estimer une opération de comptage en fonction de l'entrée d'un bit additionnel dans la mémoire tampon afin de résoudre le manque de l'espace mémoire de l'entrelaceur de blocs dû au bit additionnel inclus dans la sortie de l'entrelaceur de blocs.

**13.** Procédé d'adaptation de vitesse de transmission pour le système de communication mobile selon la revendication 10 ou 11, dans lequel l'étape d'adaptation et de transmission des bits de données comprend l'étape consistant à :

diviser les bits de mot de code entrés sous la forme de la trame de radio en fonction du mot de code respectif pour les bits de mot de code.

**14.** Procédé d'adaptation de vitesse de transmission pour le système de communication mobile selon la revendication 13, dans lequel l'étape d'adaptation et de transmission des bits de données comprend les étapes consistant à :

effectuer une adaptation de vitesse de transmission séparément pour les bits de mot de code divisés pour un mot de code ; et
restaurer et mémoriser les bits dont la vitesse de transmission est adaptée dans l'ordre de l'entrée des bits dans le diviseur de bits.

**15.** Procédé d'adaptation de vitesse de transmission pour le système de communication mobile selon la revendication 14, dans lequel une étape d'entrée qui entre la colonne de bits délivrée en sortie détermine la position de la colonne de bits z entrée dans l'étape de division selon l'équation ci-dessous :

$$j = (2 \times i + (b - [2 \times i/Fi])\%2)\%Fi$$

dans laquelle % est un opérateur modulo, i est le numéro de la colonne de l'entrelaceur, et b est une constante déterminée en fonction du type de bit.

FIG. 1

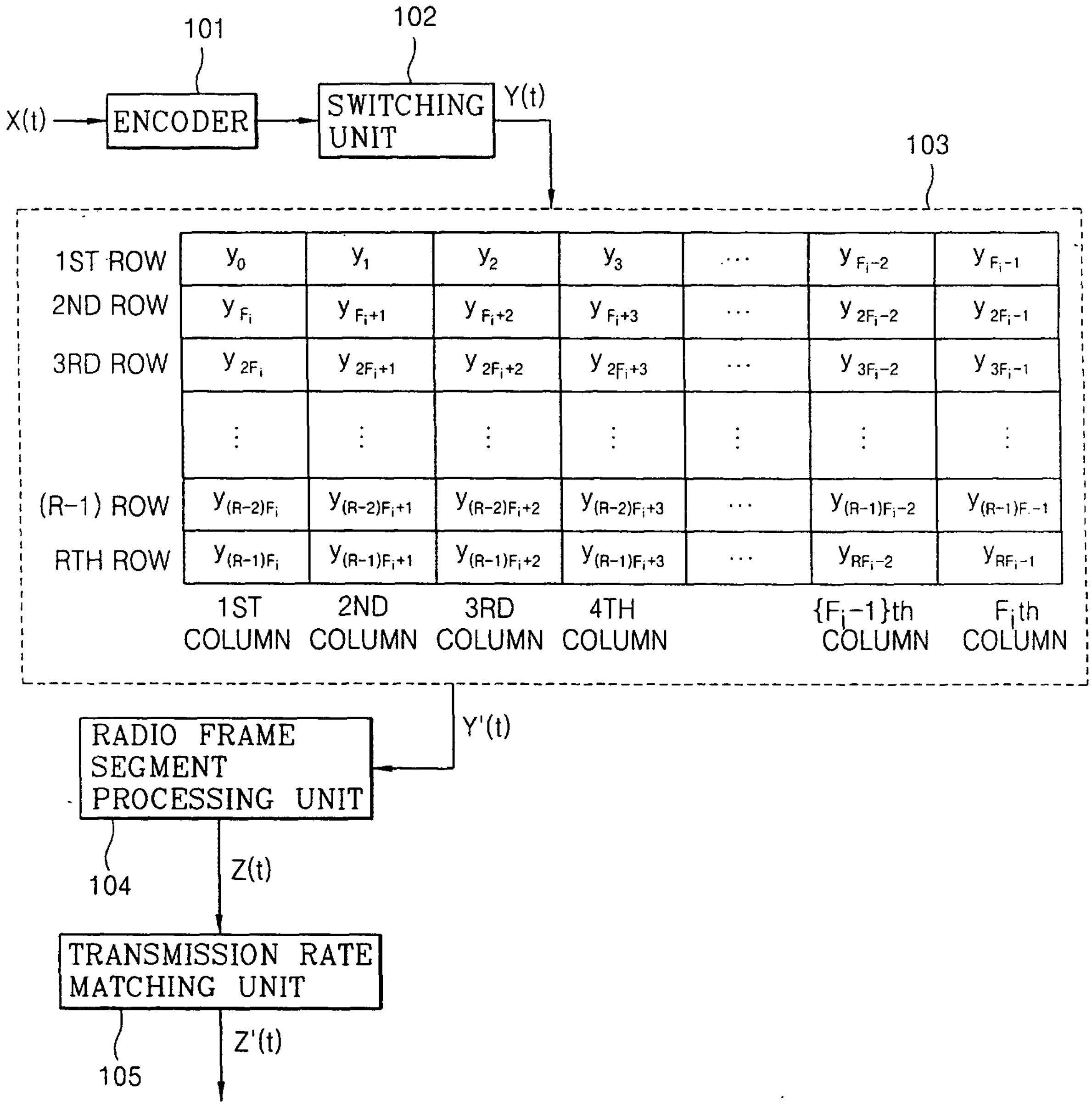
101
102
X(t)
ENCODER
SWITCHING UNIT
Y(t)
103
1ST ROW
2ND ROW
3RD ROW
(R-1) ROW
RTH ROW
1ST COLUMN
2ND COLUMN
3RD COLUMN
4TH COLUMN
{Fi-1}th COLUMN
Fith COLUMN
Y'(t)
RADIO FRAME SEGMENT PROCESSING UNIT
104
Z(t)
TRANSMISSION RATE MATCHING UNIT
105
Z'(t)

FIG. 2

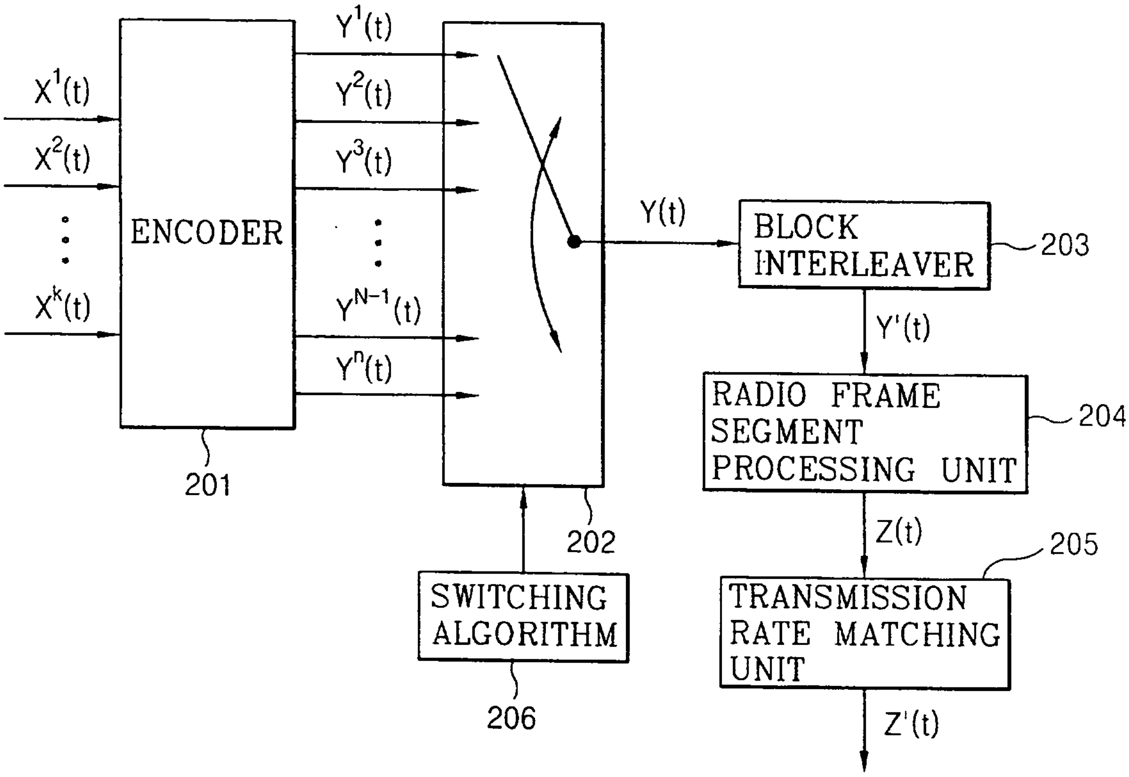
X1(t)
X2(t)
Xk(t)
ENCODER
201
Y1(t)
Y2(t)
Y3(t)
YN-1(t)
Yn(t)
202
Y(t)
SWITCHING ALGORITHM
206
BLOCK INTERLEAVER
203
Y'(t)
RADIO FRAME SEGMENT PROCESSING UNIT
204
Z(t)
205
TRANSMISSION RATE MATCHING UNIT
Z'(t)

# FIG. 3

```
if(GCM(n,Fi)=1 {                    //When"n"and "Fi"is coprime
        index=0;
        do while (index<index_Limit
                k=(index%n)+1;
                switching at Y^k ;
                index=index+1;
        end do;
}else{                              //When"n"and "Fi"is not coprime
        index =0;
        m=0;
        do while (index<index_Limit)
                k=( (index%n)+m)%n+1;
                swiching at Y^k;
                index=index+1;
                if( ( index %(nFi))=0 ){m=0;}
                else
                        if( (index%LCM(n,Fi))=0 ) {m=m+1;}
        end do;
}
```

LCM(a,b):LEAST COMMON MULTIPLE BETWEEN a AND b
GCM(a,b):GREATEST COMMON MEASURE BETWEEN a AND b
%:MODULAR OPERATOR

FIG. 4

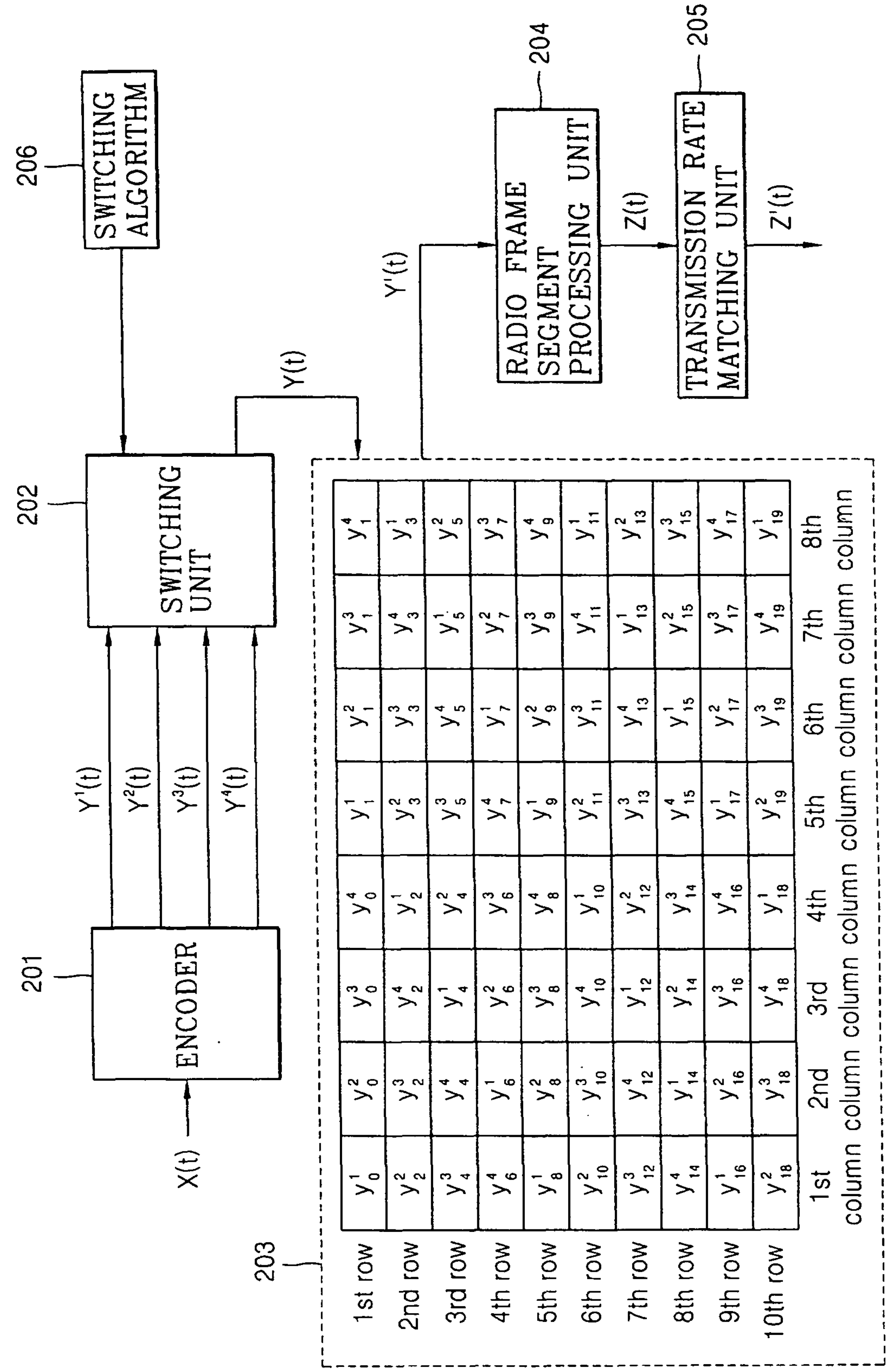
201
ENCODER
X(t)
$Y^1(t)$
$Y^2(t)$
$Y^3(t)$
$Y^4(t)$
202
SWITCHING UNIT
206
SWITCHING ALGORITHM
Y(t)
203
1st row: $y^1_0$ $y^2_0$ $y^3_0$ $y^4_0$ $y^1_1$ $y^2_1$ $y^3_1$ $y^4_1$
2nd row: $y^2_2$ $y^3_2$ $y^4_2$ $y^1_2$ $y^2_3$ $y^3_3$ $y^4_3$ $y^1_3$
3rd row: $y^3_4$ $y^4_4$ $y^1_4$ $y^2_4$ $y^3_5$ $y^4_5$ $y^1_5$ $y^2_5$
4th row: $y^4_6$ $y^1_6$ $y^2_6$ $y^3_6$ $y^4_7$ $y^1_7$ $y^2_7$ $y^3_7$
5th row: $y^1_8$ $y^2_8$ $y^3_8$ $y^4_8$ $y^1_9$ $y^2_9$ $y^3_9$ $y^4_9$
6th row: $y^2_{10}$ $y^3_{10}$ $y^4_{10}$ $y^1_{10}$ $y^2_{11}$ $y^3_{11}$ $y^4_{11}$ $y^1_{11}$
7th row: $y^3_{12}$ $y^4_{12}$ $y^1_{12}$ $y^2_{12}$ $y^3_{13}$ $y^4_{13}$ $y^1_{13}$ $y^2_{13}$
8th row: $y^4_{14}$ $y^1_{14}$ $y^2_{14}$ $y^3_{14}$ $y^4_{15}$ $y^1_{15}$ $y^2_{15}$ $y^3_{15}$
9th row: $y^1_{16}$ $y^2_{16}$ $y^3_{16}$ $y^4_{16}$ $y^1_{17}$ $y^2_{17}$ $y^3_{17}$ $y^4_{17}$
10th row: $y^2_{18}$ $y^3_{18}$ $y^4_{18}$ $y^1_{18}$ $y^2_{19}$ $y^3_{19}$ $y^4_{19}$ $y^1_{19}$
1st column 2nd column 3rd column 4th column 5th column 6th column 7th column 8th column
Y'(t)
204
RADIO FRAME SEGMENT PROCESSING UNIT
Z(t)
205
TRANSMISSION RATE MATCHING UNIT
Z'(t)

FIG. 5

```
if(GCM(n,F ) =1){                          //When"n"and "Fi"is coprime
        index=0;
        do while (index < index_Limit)
                k=(index %n)+1;
                switching at  Y^k;
                index=index+1;


        end do;
} else {                                   //When"n"and "Fi"is not coprime
        index=0 ;
        do while (index < index_Limit)
                k=(index %n)+1;
                switching at  Y^k;
                index=index+1;
                if (imdex%n = 0)           {switching at Y^c;}
        end do;
}
```

LCM(a,b):LEAST COMMON MULTIPLE
BETWEEN a AND b
GCM(a,b):GREATEST COMMON MEASURE
BETWEEN a AND b
%:MODULAR OPERATOR

FIG. 6

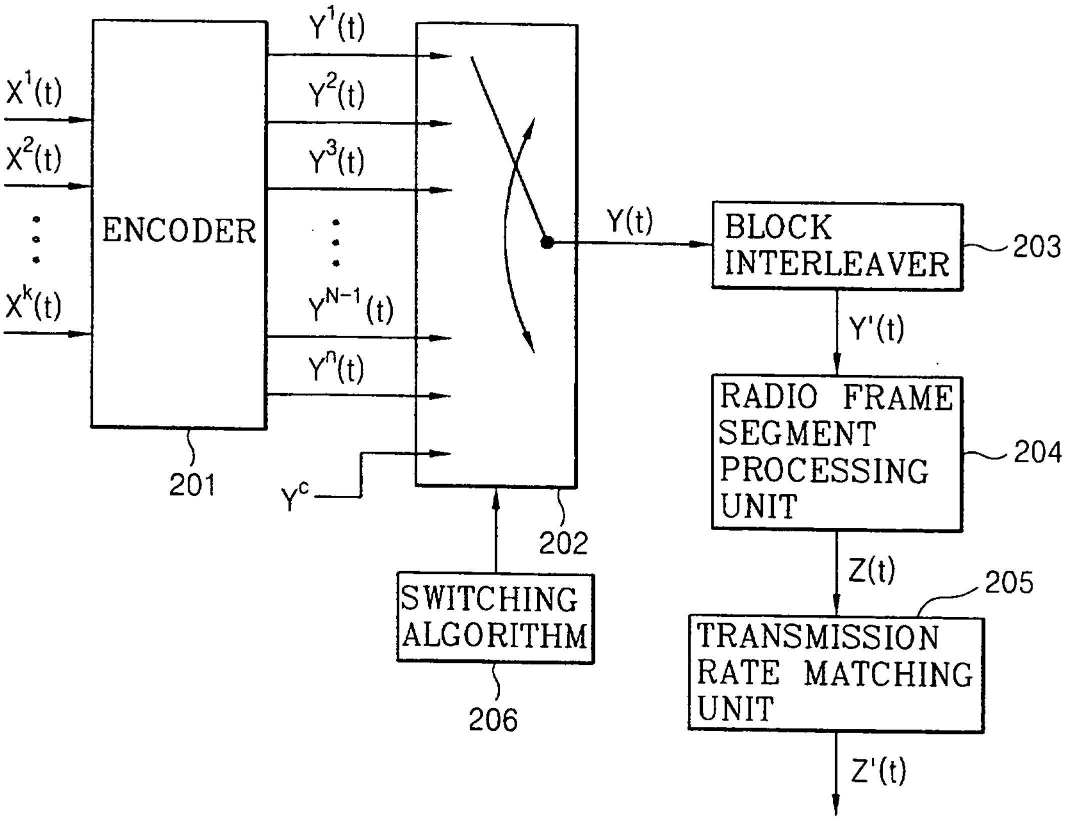
X1(t)
X2(t)
Xk(t)
ENCODER
201
Y1(t)
Y2(t)
Y3(t)
YN-1(t)
Yn(t)
Yc
202
Y(t)
SWITCHING ALGORITHM
206
BLOCK INTERLEAVER
203
Y'(t)
RADIO FRAME SEGMENT PROCESSING UNIT
204
Z(t)
205
TRANSMISSION RATE MATCHING UNIT
Z'(t)

FIG. 7

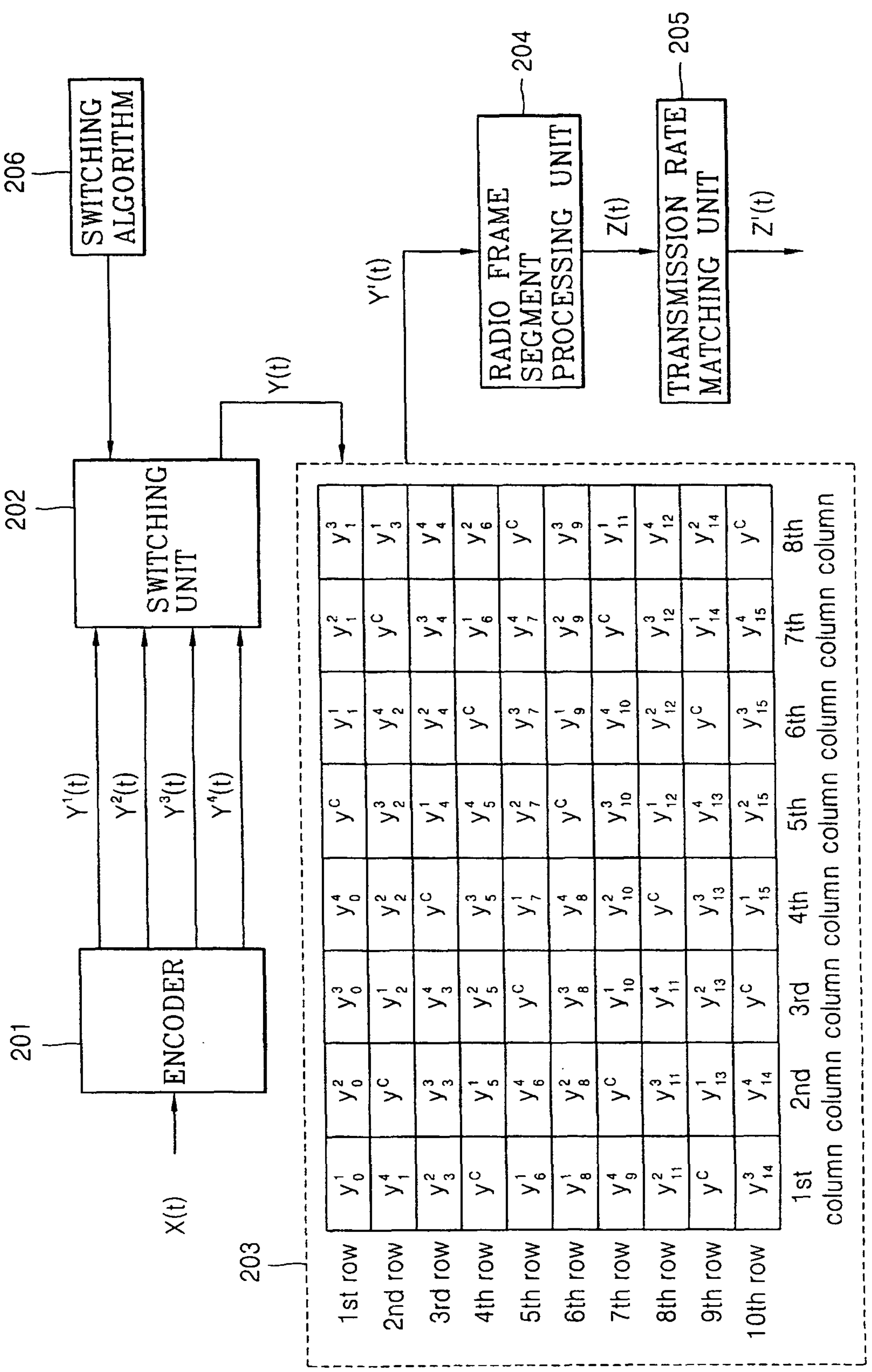


| | 1st column | 2nd column | 3rd column | 4th column | 5th column | 6th column | 7th column | 8th column |
|---|---|---|---|---|---|---|---|---|
| 1st row | $y^1_0$ | $y^2_0$ | $y^3_0$ | $y^4_0$ | $y^C$ | $y^1_1$ | $y^2_1$ | $y^3_1$ |
| 2nd row | $y^4_1$ | $y^C$ | $y^1_2$ | $y^2_2$ | $y^3_2$ | $y^4_2$ | $y^C$ | $y^1_3$ |
| 3rd row | $y^2_3$ | $y^3_3$ | $y^4_3$ | $y^C$ | $y^1_4$ | $y^2_4$ | $y^3_4$ | $y^4_4$ |
| 4th row | $y^C$ | $y^1_5$ | $y^2_5$ | $y^3_5$ | $y^4_5$ | $y^C$ | $y^1_6$ | $y^2_6$ |
| 5th row | $y^1_6$ | $y^4_6$ | $y^C$ | $y^1_7$ | $y^2_7$ | $y^3_7$ | $y^4_7$ | $y^C$ |
| 6th row | $y^1_8$ | $y^2_8$ | $y^3_8$ | $y^4_8$ | $y^C$ | $y^1_9$ | $y^2_9$ | $y^3_9$ |
| 7th row | $y^4_9$ | $y^C$ | $y^1_{10}$ | $y^2_{10}$ | $y^3_{10}$ | $y^4_{10}$ | $y^C$ | $y^1_{11}$ |
| 8th row | $y^2_{11}$ | $y^3_{11}$ | $y^4_{11}$ | $y^C$ | $y^1_{12}$ | $y^2_{12}$ | $y^3_{12}$ | $y^4_{12}$ |
| 9th row | $y^C$ | $y^1_{13}$ | $y^2_{13}$ | $y^3_{13}$ | $y^4_{13}$ | $y^C$ | $y^1_{14}$ | $y^2_{14}$ |
| 10th row | $y^3_{14}$ | $y^4_{14}$ | $y^C$ | $y^1_{15}$ | $y^2_{15}$ | $y^3_{15}$ | $y^4_{15}$ | $y^C$ |

FIG. 8

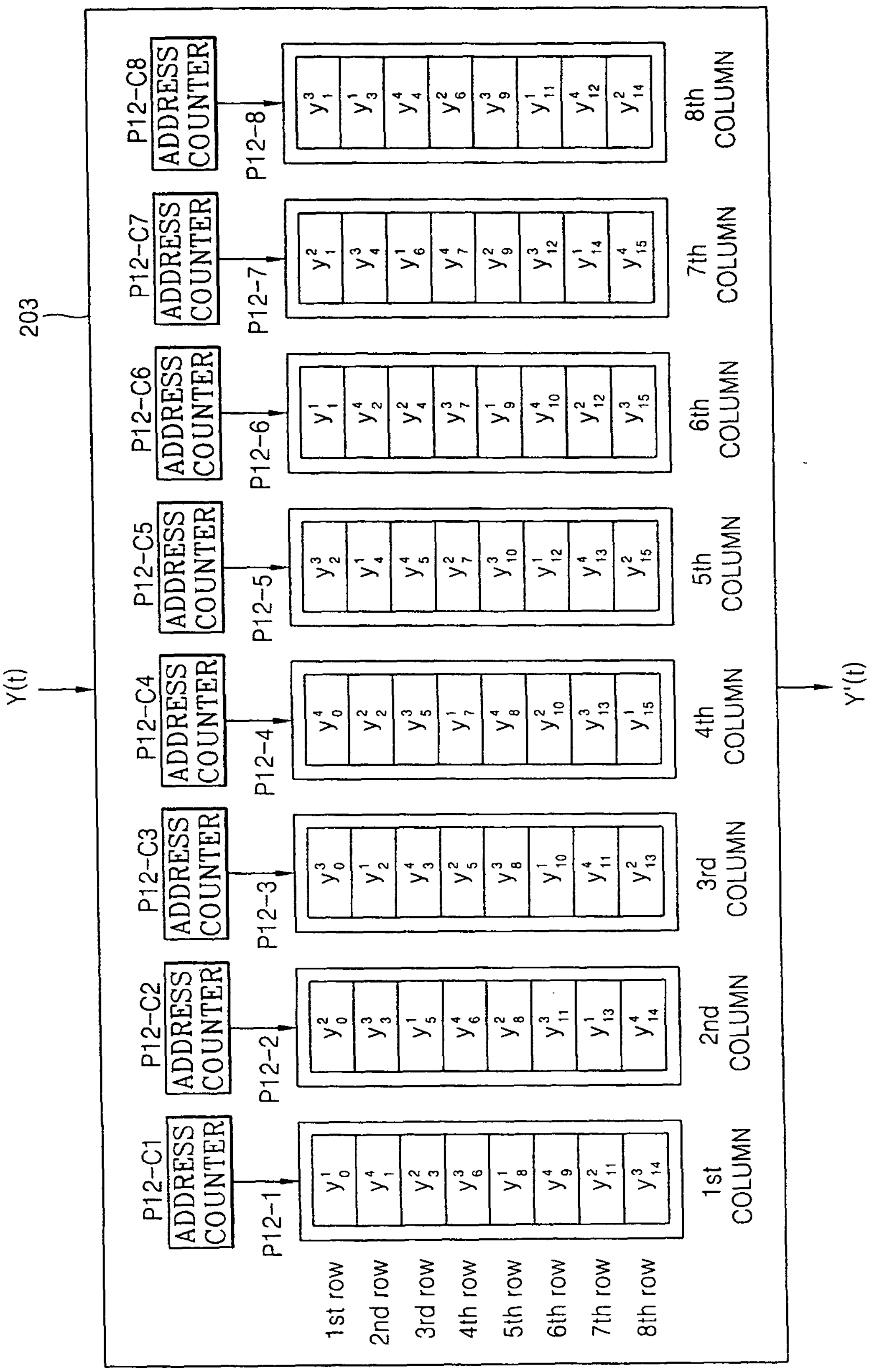
203
Y(t)
Y'(t)
P12-C1 ADDRESS COUNTER
P12-C2 ADDRESS COUNTER
P12-C3 ADDRESS COUNTER
P12-C4 ADDRESS COUNTER
P12-C5 ADDRESS COUNTER
P12-C6 ADDRESS COUNTER
P12-C7 ADDRESS COUNTER
P12-C8 ADDRESS COUNTER
P12-1
P12-2
P12-3
P12-4
P12-5
P12-6
P12-7
P12-8
1st row
2nd row
3rd row
4th row
5th row
6th row
7th row
8th row
$y^1_0$ $y^4_1$ $y^2_3$ $y^3_6$ $y^1_8$ $y^4_9$ $y^2_{11}$ $y^3_{14}$
1st COLUMN
$y^2_0$ $y^3_3$ $y^1_5$ $y^4_6$ $y^2_8$ $y^3_{11}$ $y^1_{13}$ $y^4_{14}$
2nd COLUMN
$y^3_0$ $y^1_2$ $y^4_3$ $y^2_5$ $y^3_8$ $y^1_{10}$ $y^4_{11}$ $y^2_{13}$
3rd COLUMN
$y^4_0$ $y^2_2$ $y^3_5$ $y^1_7$ $y^4_8$ $y^2_{10}$ $y^3_{13}$ $y^1_{15}$
4th COLUMN
$y^3_2$ $y^1_4$ $y^4_5$ $y^2_7$ $y^3_{10}$ $y^1_{12}$ $y^4_{13}$ $y^2_{15}$
5th COLUMN
$y^1_1$ $y^4_2$ $y^2_4$ $y^3_7$ $y^1_9$ $y^4_{10}$ $y^2_{12}$ $y^3_{15}$
6th COLUMN
$y^2_1$ $y^3_4$ $y^1_6$ $y^4_7$ $y^2_9$ $y^3_{12}$ $y^1_{14}$ $y^4_{15}$
7th COLUMN
$y^3_1$ $y^1_3$ $y^4_4$ $y^2_6$ $y^3_9$ $y^1_{11}$ $y^4_{12}$ $y^2_{14}$
8th COLUMN

FIG. 9

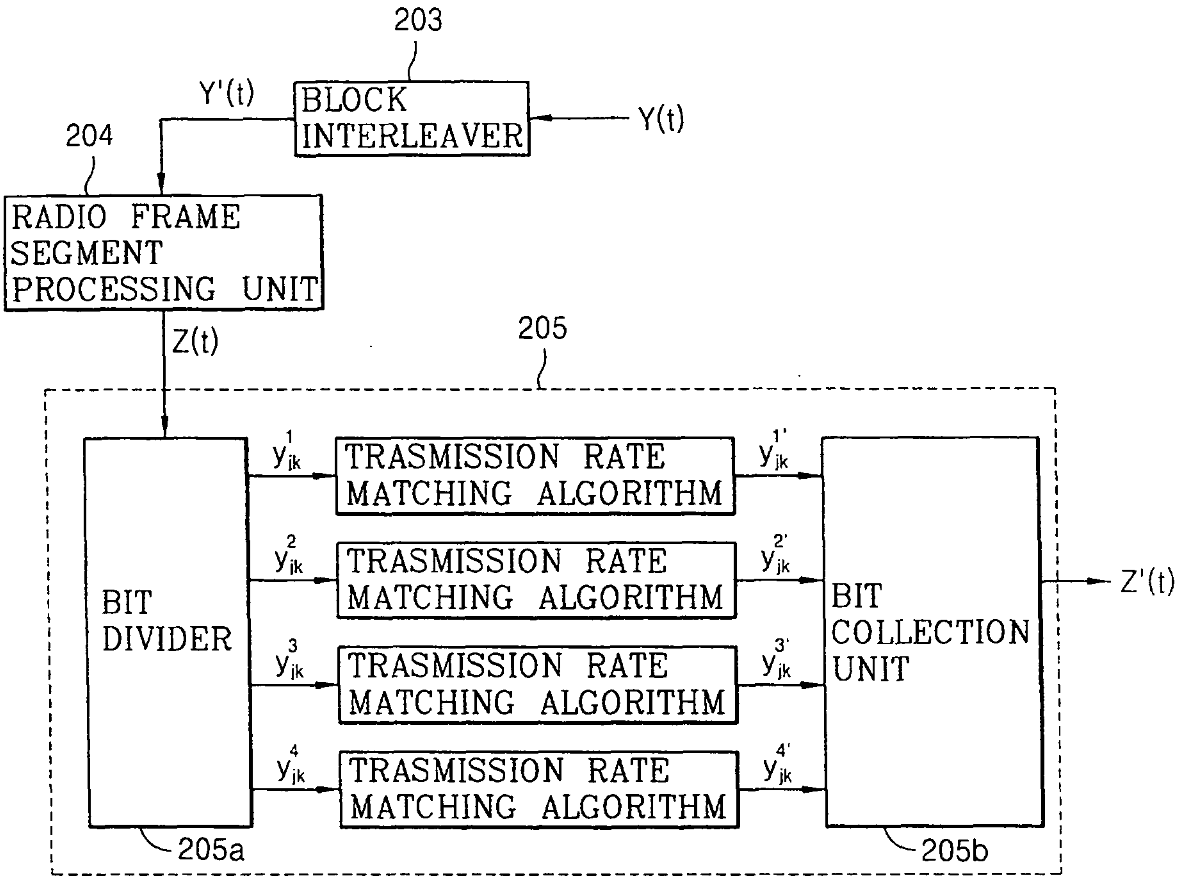
203
BLOCK INTERLEAVER
Y(t)
Y'(t)
204
RADIO FRAME SEGMENT PROCESSING UNIT
Z(t)
205
BIT DIVIDER
$y_{jk}^{1}$
$y_{jk}^{2}$
$y_{jk}^{3}$
$y_{jk}^{4}$
TRASMISSION RATE MATCHING ALGORITHM
TRASMISSION RATE MATCHING ALGORITHM
TRASMISSION RATE MATCHING ALGORITHM
TRASMISSION RATE MATCHING ALGORITHM
$y_{jk}^{1'}$
$y_{jk}^{2'}$
$y_{jk}^{3'}$
$y_{jk}^{4'}$
BIT COLLECTION UNIT
Z'(t)
205a
205b

FIG. 10

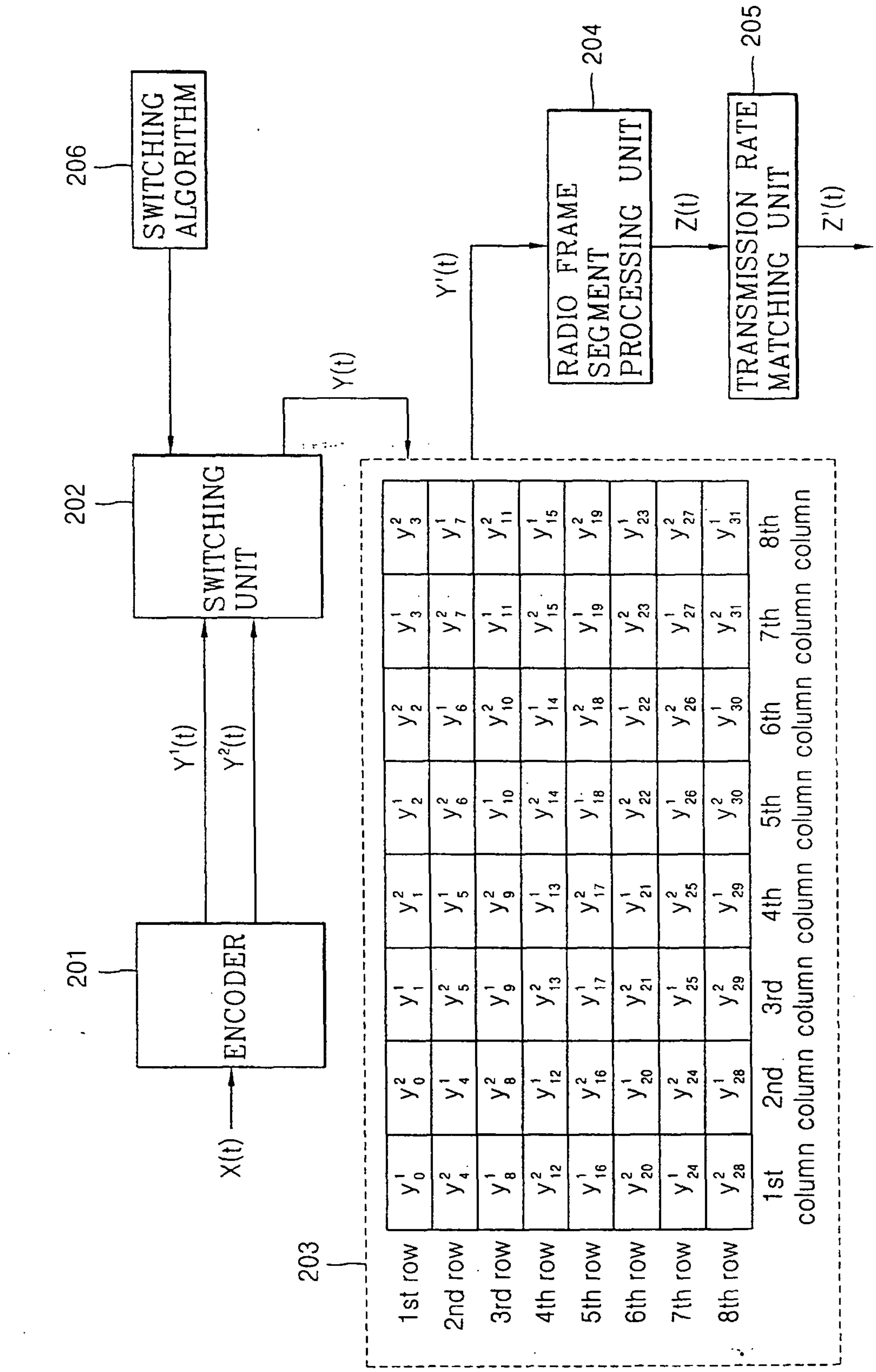
SWITCHING ALGORITHM
206
SWITCHING UNIT
202
ENCODER
201
X(t)
$Y^1(t)$
$Y^2(t)$
Y(t)
Y'(t)
RADIO FRAME SEGMENT PROCESSING UNIT
204
Z(t)
TRANSMISSION RATE MATCHING UNIT
205
Z'(t)
203
1st row: $y^1_0$ $y^2_0$ $y^1_1$ $y^2_1$ $y^1_2$ $y^2_2$ $y^1_3$ $y^2_3$
2nd row: $y^2_4$ $y^1_4$ $y^2_5$ $y^1_5$ $y^2_6$ $y^1_6$ $y^2_7$ $y^1_7$
3rd row: $y^1_8$ $y^2_8$ $y^1_9$ $y^2_9$ $y^1_{10}$ $y^2_{10}$ $y^1_{11}$ $y^2_{11}$
4th row: $y^2_{12}$ $y^1_{12}$ $y^2_{13}$ $y^1_{13}$ $y^2_{14}$ $y^1_{14}$ $y^2_{15}$ $y^1_{15}$
5th row: $y^1_{16}$ $y^2_{16}$ $y^1_{17}$ $y^2_{17}$ $y^1_{18}$ $y^2_{18}$ $y^1_{19}$ $y^2_{19}$
6th row: $y^2_{20}$ $y^1_{20}$ $y^2_{21}$ $y^1_{21}$ $y^2_{22}$ $y^1_{22}$ $y^2_{23}$ $y^1_{23}$
7th row: $y^1_{24}$ $y^2_{24}$ $y^1_{25}$ $y^2_{25}$ $y^1_{26}$ $y^2_{26}$ $y^1_{27}$ $y^2_{27}$
8th row: $y^2_{28}$ $y^1_{28}$ $y^2_{29}$ $y^1_{29}$ $y^2_{30}$ $y^1_{30}$ $y^2_{31}$ $y^1_{31}$
1st column
2nd column
3rd column
4th column
5th column
6th column
7th column
8th column

FIG. 11

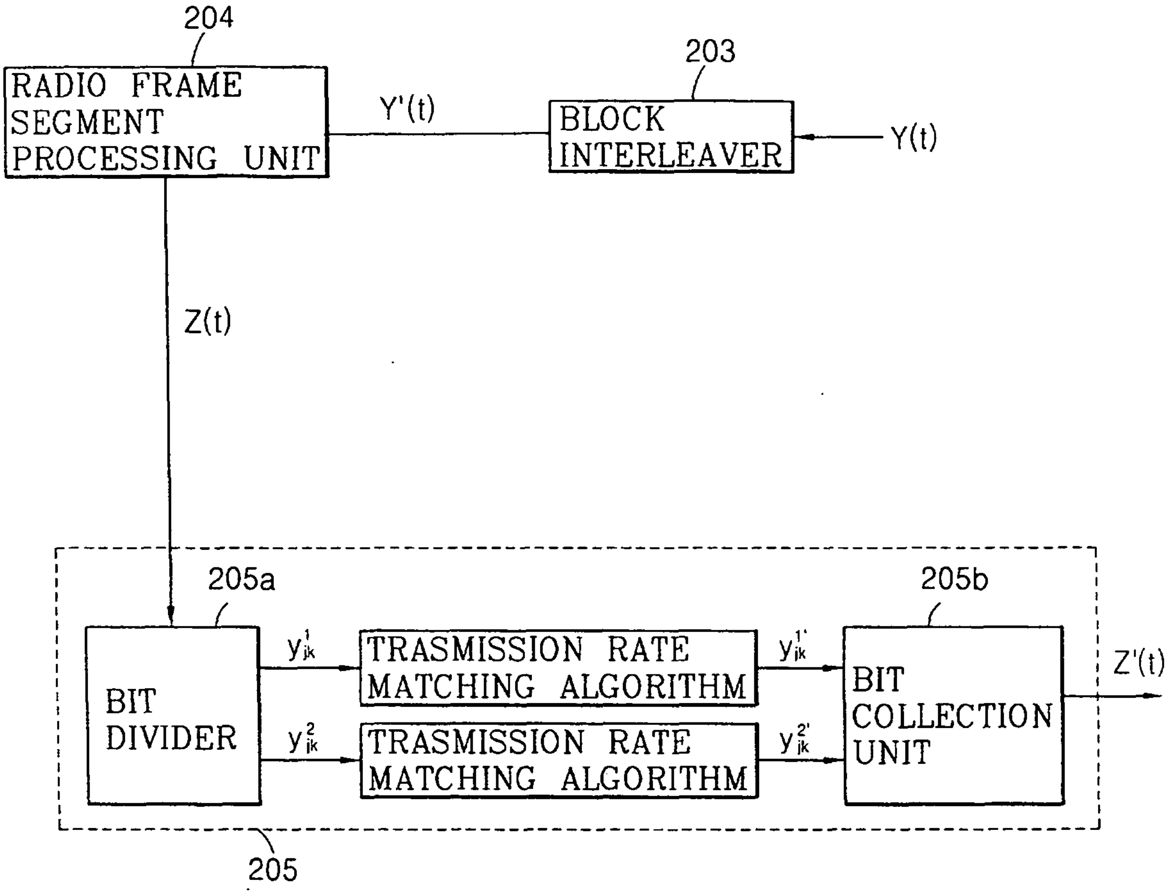


FIG. 12

for(i=0;i<$F_i$; i++) $j=(2 \times i+(b-\lfloor 2 \times i/F_i \rfloor)\%2)\%F_i$

where, index b is used to indicate $Y^1$'s bit (b=2) and $Y^2$'s bit (b=1), and $F_i \in \{2,4,8\}$

# FIG. 13

IMAGINARY INTERLEAVER FOR $Y^1(t)$ — S501

| C | C | C | C | C | C | C | C |
|---|---|---|---|---|---|---|---|
| $y^1_0$ | $y^1_1$ | $y^1_2$ | $y^1_3$ | $y^1_4$ | $y^1_5$ | $y^1_6$ | $y^1_7$ |
| $y^1_8$ | $y^1_9$ | $y^1_{10}$ | $y^1_{11}$ | $y^1_{12}$ | $y^1_{13}$ | $y^1_{14}$ | $y^1_{15}$ |
| $y^1_{16}$ | $y^1_{17}$ | $y^1_{18}$ | $y^1_{19}$ | $y^1_{20}$ | $y^1_{21}$ | $y^1_{22}$ | $y^1_{23}$ |
| $y^1_{24}$ | $y^1_{25}$ | $y^1_{26}$ | $y^1_{27}$ | $y^1_{28}$ | $y^1_{29}$ | $y^1_{30}$ | $y^1_{31}$ |

IMAGINARY INTERLEAVER FOR $Y^2(t)$ — S502

| C'-0 | C'-1 | C'-2 | C'-3 | C'-4 | C'-5 | C'-6 | C'-7 |
|---|---|---|---|---|---|---|---|
| $y^2_0$ | $y^2_1$ | $y^2_2$ | $y^2_3$ | $y^2_4$ | $y^2_5$ | $y^3_6$ | $y^2_7$ |
| $y^2_8$ | $y^2_9$ | $y^2_{10}$ | $y^2_{11}$ | $y^2_{12}$ | $y^2_{13}$ | $y^2_{14}$ | $y^2_{15}$ |
| $y^2_{16}$ | $y^2_{17}$ | $y^2_{18}$ | $y^2_{19}$ | $y^2_{20}$ | $y^2_{21}$ | $y^2_{22}$ | $y^2_{23}$ |
| $y^2_{24}$ | $y^2_{25}$ | $y^2_{26}$ | $y^2_{27}$ | $y^2_{28}$ | $y^2_{29}$ | $y^2_{30}$ | $y^2_{31}$ |

REAL INTERLEAVER FOR $Y^1(t)$ AND $Y^2(t)$ — S503

| C-0 | C-1 | C-2 | C-3 | C-4 | C-5 | C-6 | C-7 |
|---|---|---|---|---|---|---|---|
| $y^1_0$ | $y^2_0$ | $y^1_1$ | $y^2_1$ | $y^1_2$ | $y^2_2$ | $y^1_3$ | $y^2_3$ |
| $y^2_4$ | $y^1_4$ | $y^2_5$ | $y^1_5$ | $y^2_6$ | $y^1_6$ | $y^2_7$ | $y^1_7$ |
| $y^1_8$ | $y^2_8$ | $y^1_9$ | $y^2_9$ | $y^1_{10}$ | $y^2_{10}$ | $y^1_{11}$ | $y^2_{11}$ |
| $y^2_{12}$ | $y^1_{12}$ | $y^2_{13}$ | $y^1_{13}$ | $y^2_{14}$ | $y^1_{14}$ | $y^2_{15}$ | $y^1_{15}$ |
| $y^1_{16}$ | $y^2_{16}$ | $y^1_{17}$ | $y^2_{17}$ | $y^1_{18}$ | $y^2_{18}$ | $y^1_{19}$ | $y^2_{19}$ |
| $y^2_{20}$ | $y^1_{20}$ | $y^2_{21}$ | $y^1_{21}$ | $y^2_{22}$ | $y^1_{22}$ | $y^2_{23}$ | $y^1_{23}$ |
| $y^1_{24}$ | $y^2_{24}$ | $y^1_{25}$ | $y^2_{25}$ | $y^1_{26}$ | $y^2_{26}$ | $y^1_{27}$ | $y^2_{27}$ |
| $y^2_{28}$ | $y^1_{28}$ | $y^2_{29}$ | $y^1_{29}$ | $y^2_{30}$ | $y^1_{30}$ | $y^2_{31}$ | $y^1_{31}$ |

FIG. 14

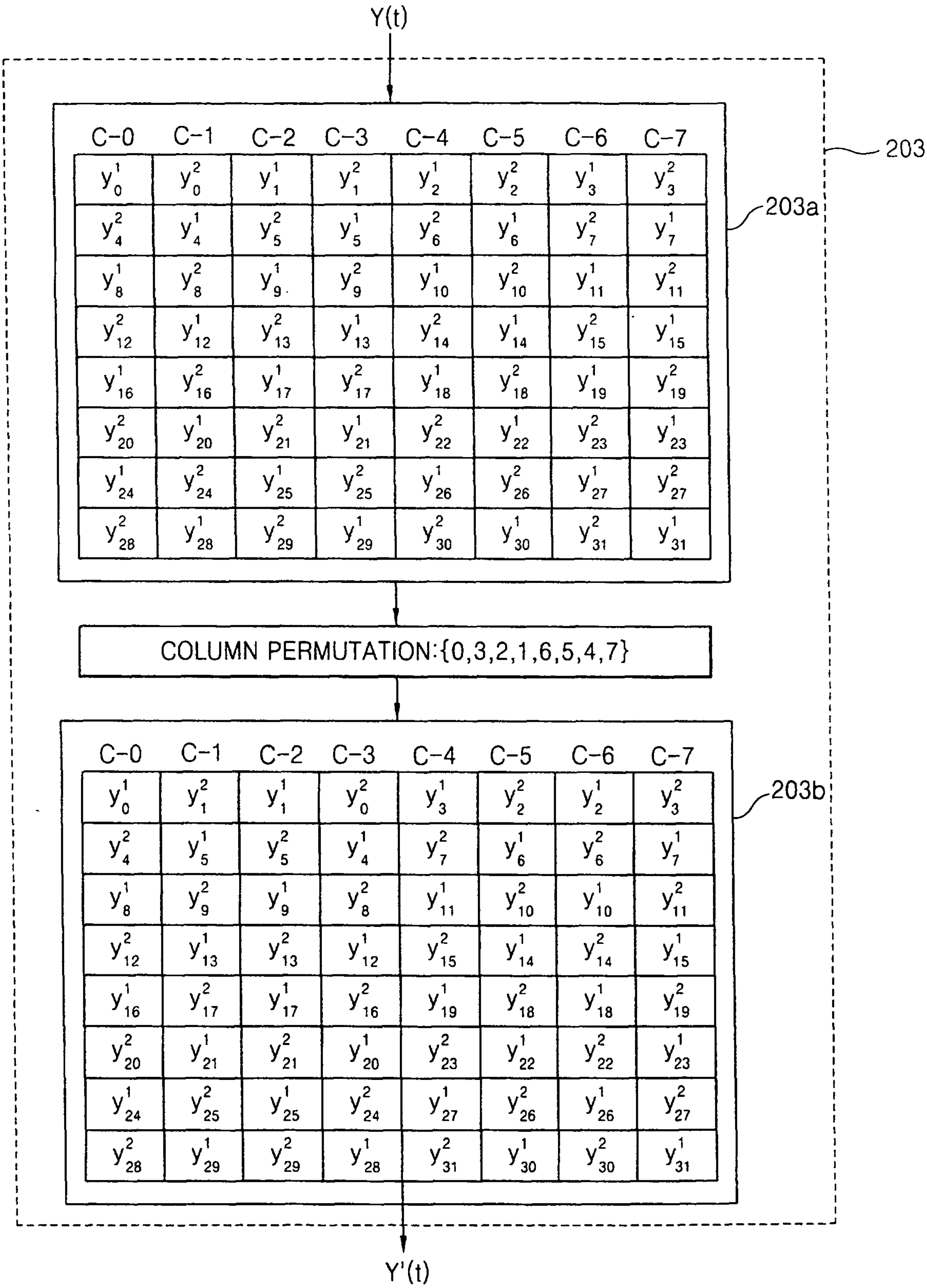
Y(t)
203
203a
C-0 C-1 C-2 C-3 C-4 C-5 C-6 C-7
$y^1_0$ $y^2_0$ $y^1_1$ $y^2_1$ $y^1_2$ $y^2_2$ $y^1_3$ $y^2_3$
$y^2_4$ $y^1_4$ $y^2_5$ $y^1_5$ $y^2_6$ $y^1_6$ $y^2_7$ $y^1_7$
$y^1_8$ $y^2_8$ $y^1_9$ $y^2_9$ $y^1_{10}$ $y^2_{10}$ $y^1_{11}$ $y^2_{11}$
$y^2_{12}$ $y^1_{12}$ $y^2_{13}$ $y^1_{13}$ $y^2_{14}$ $y^1_{14}$ $y^2_{15}$ $y^1_{15}$
$y^1_{16}$ $y^2_{16}$ $y^1_{17}$ $y^2_{17}$ $y^1_{18}$ $y^2_{18}$ $y^1_{19}$ $y^2_{19}$
$y^2_{20}$ $y^1_{20}$ $y^2_{21}$ $y^1_{21}$ $y^2_{22}$ $y^1_{22}$ $y^2_{23}$ $y^1_{23}$
$y^1_{24}$ $y^2_{24}$ $y^1_{25}$ $y^2_{25}$ $y^1_{26}$ $y^2_{26}$ $y^1_{27}$ $y^2_{27}$
$y^2_{28}$ $y^1_{28}$ $y^2_{29}$ $y^1_{29}$ $y^2_{30}$ $y^1_{30}$ $y^2_{31}$ $y^1_{31}$
COLUMN PERMUTATION:{0,3,2,1,6,5,4,7}
203b
C-0 C-1 C-2 C-3 C-4 C-5 C-6 C-7
$y^1_0$ $y^2_1$ $y^1_1$ $y^2_0$ $y^1_3$ $y^2_2$ $y^1_2$ $y^2_3$
$y^2_4$ $y^1_5$ $y^2_5$ $y^1_4$ $y^2_7$ $y^1_6$ $y^2_6$ $y^1_7$
$y^1_8$ $y^2_9$ $y^1_9$ $y^2_8$ $y^1_{11}$ $y^2_{10}$ $y^1_{10}$ $y^2_{11}$
$y^2_{12}$ $y^1_{13}$ $y^2_{13}$ $y^1_{12}$ $y^2_{15}$ $y^1_{14}$ $y^2_{14}$ $y^1_{15}$
$y^1_{16}$ $y^2_{17}$ $y^1_{17}$ $y^2_{16}$ $y^1_{19}$ $y^2_{18}$ $y^1_{18}$ $y^2_{19}$
$y^2_{20}$ $y^1_{21}$ $y^2_{21}$ $y^1_{20}$ $y^2_{23}$ $y^1_{22}$ $y^2_{22}$ $y^1_{23}$
$y^1_{24}$ $y^2_{25}$ $y^1_{25}$ $y^2_{24}$ $y^1_{27}$ $y^2_{26}$ $y^1_{26}$ $y^2_{27}$
$y^2_{28}$ $y^1_{29}$ $y^2_{29}$ $y^1_{28}$ $y^2_{31}$ $y^1_{30}$ $y^2_{30}$ $y^1_{31}$
Y'(t)

FIG. 15

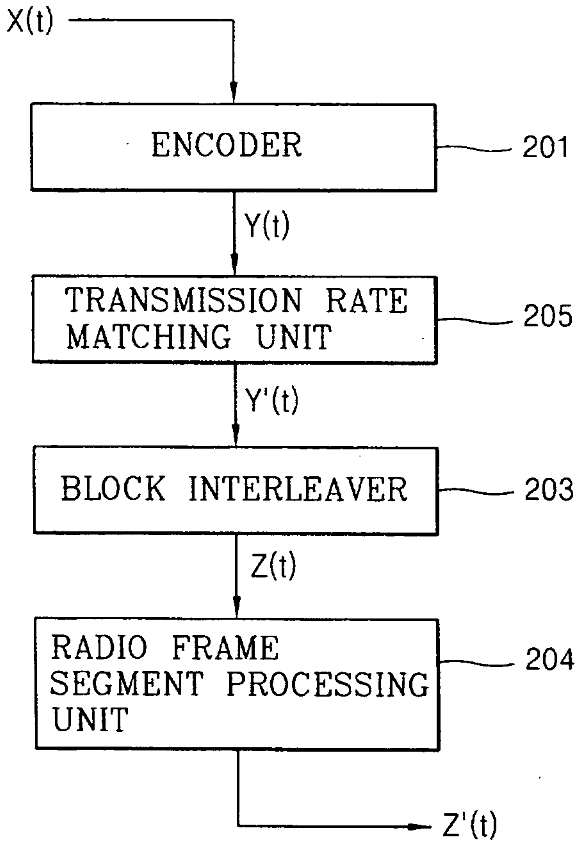
X(t)
ENCODER
201
Y(t)
TRANSMISSION RATE MATCHING UNIT
205
Y'(t)
BLOCK INTERLEAVER
203
Z(t)
RADIO FRAME SEGMENT PROCESSING UNIT
204
Z'(t)

FIG. 16

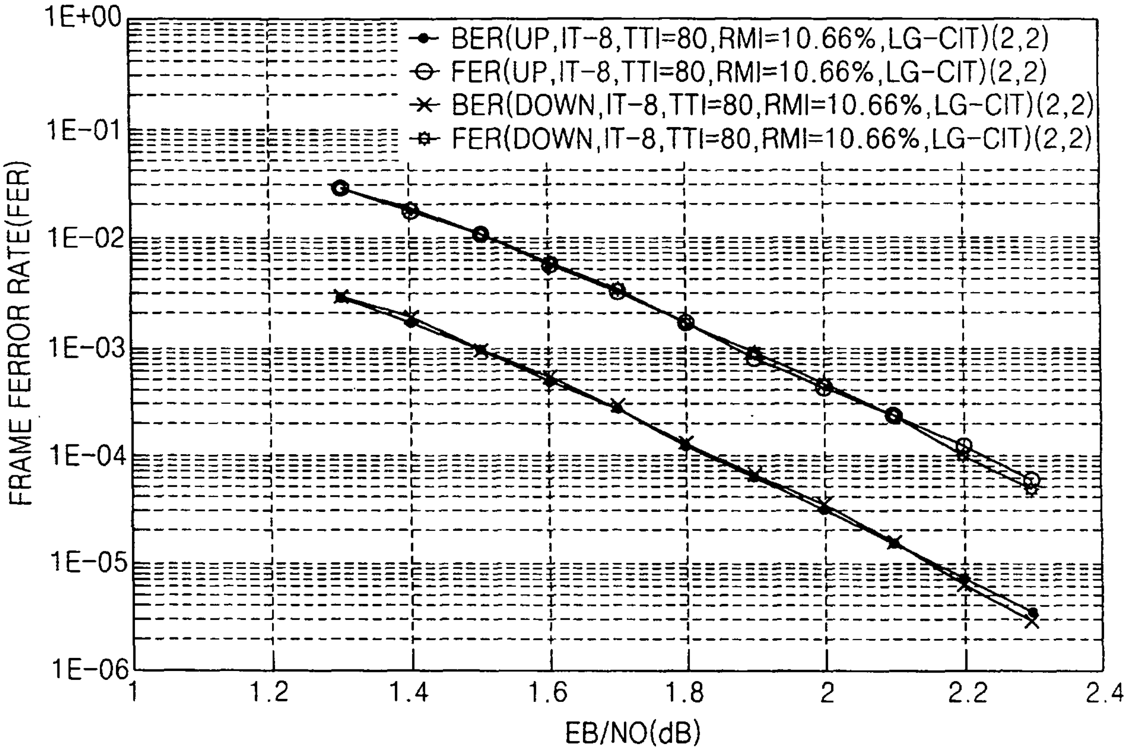
BER(UP,IT-8,TTI=80,RMI=10.66%,LG-CIT)(2,2)
FER(UP,IT-8,TTI=80,RMI=10.66%,LG-CIT)(2,2)
BER(DOWN,IT-8,TTI=80,RMI=10.66%,LG-CIT)(2,2)
FER(DOWN,IT-8,TTI=80,RMI=10.66%,LG-CIT)(2,2)
FRAME FERROR RATE(FER)
1E+00
1E-01
1E-02
1E-03
1E-04
1E-05
1E-06
1
1.2
1.4
1.6
1.8
2
2.2
2.4
EB/NO(dB)

FIG. 17

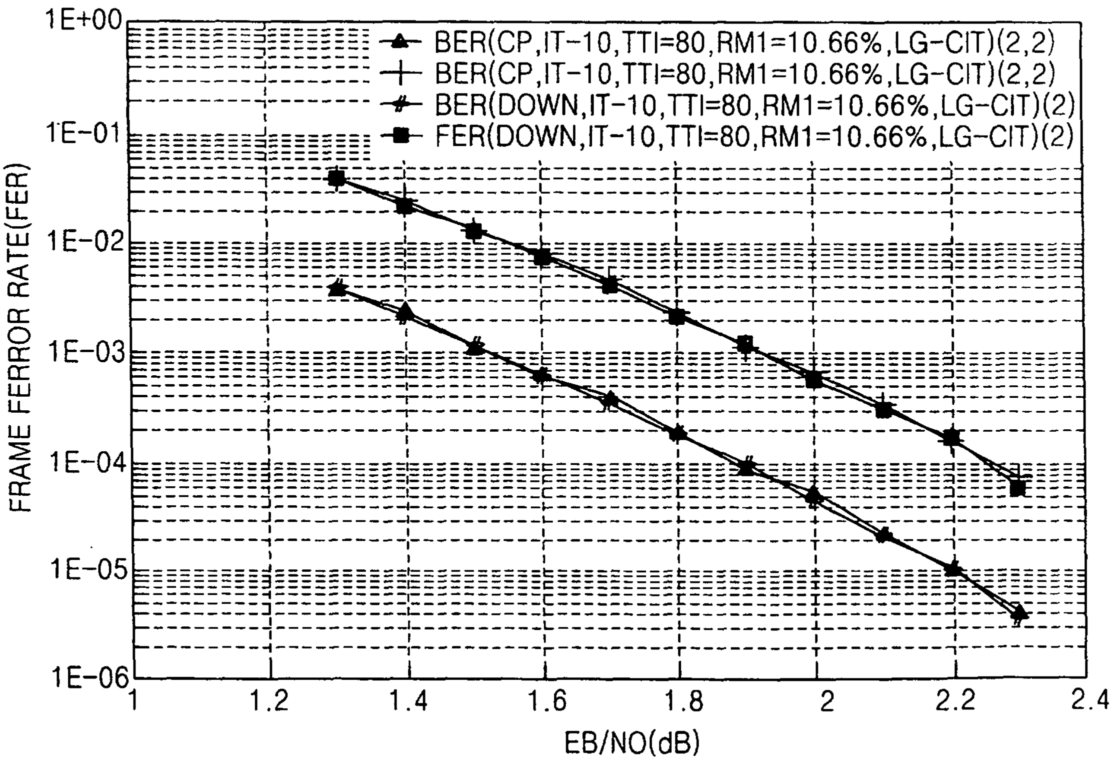
BER(CP,IT-10,TTI=80,RM1=10.66%,LG-CIT)(2,2)
BER(CP,IT-10,TTI=80,RM1=10.66%,LG-CIT)(2,2)
BER(DOWN,IT-10,TTI=80,RM1=10.66%,LG-CIT)(2)
FER(DOWN,IT-10,TTI=80,RM1=10.66%,LG-CIT)(2)
FRAME FERROR RATE(FER)
1E+00
1E-01
1E-02
1E-03
1E-04
1E-05
1E-06
1
1.2
1.4
1.6
1.8
2
2.2
2.4
EB/NO(dB)

FIG. 18

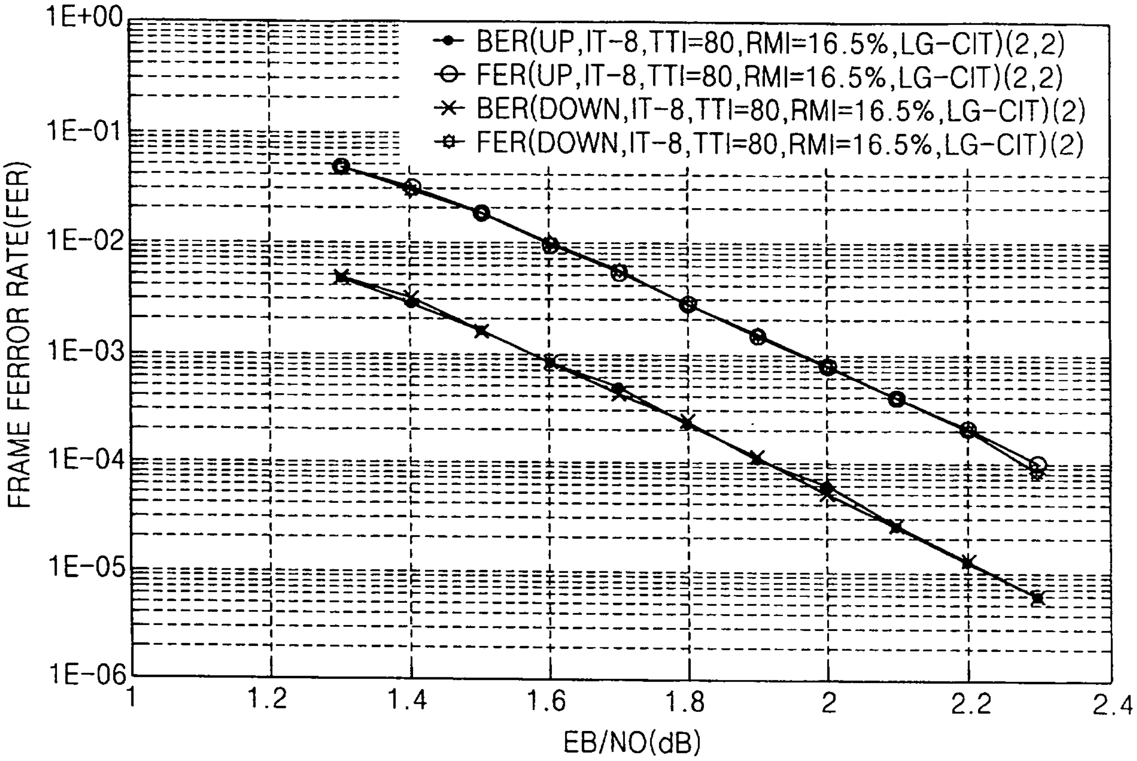
BER(UP,IT-8,TTI=80,RMI=16.5%,LG-CIT)(2,2)
FER(UP,IT-8,TTI=80,RMI=16.5%,LG-CIT)(2,2)
BER(DOWN,IT-8,TTI=80,RMI=16.5%,LG-CIT)(2)
FER(DOWN,IT-8,TTI=80,RMI=16.5%,LG-CIT)(2)
FRAME FERROR RATE(FER)
1E+00
1E-01
1E-02
1E-03
1E-04
1E-05
1E-06
1
1.2
1.4
1.6
1.8
2
2.2
2.4
EB/NO(dB)

FIG. 19

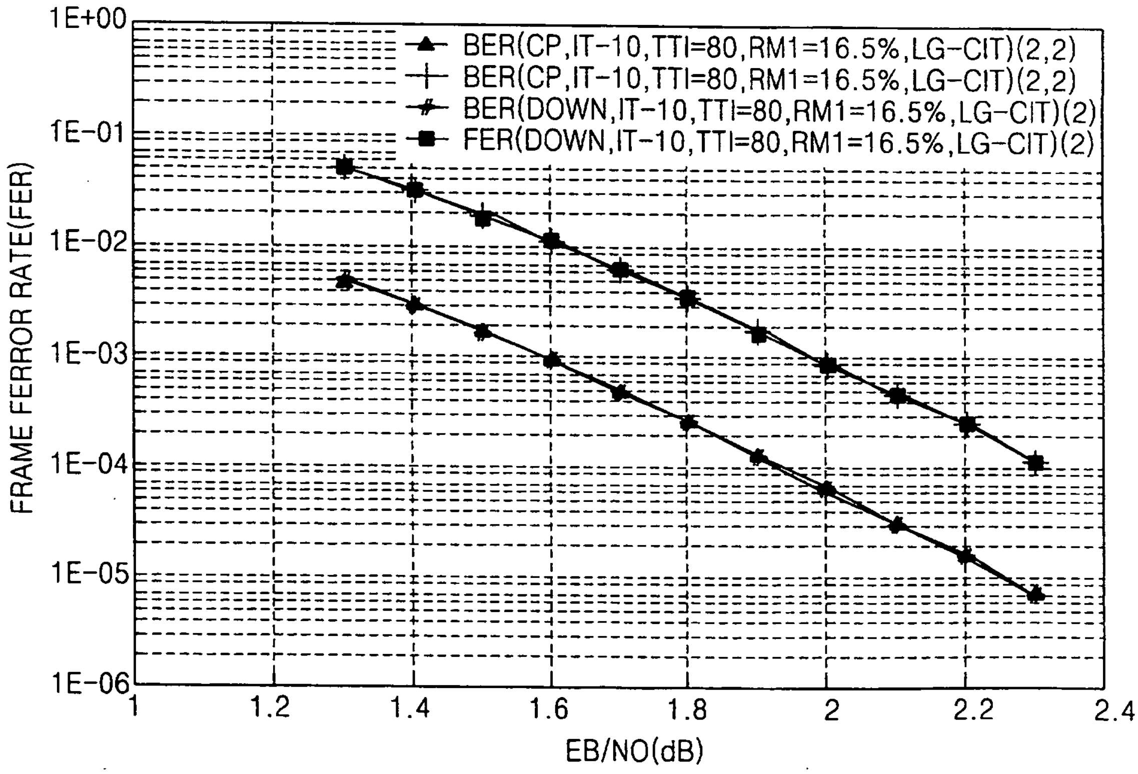
BER(CP,IT-10,TTI=80,RM1=16.5%,LG-CIT)(2,2)
BER(CP,IT-10,TTI=80,RM1=16.5%,LG-CIT)(2,2)
BER(DOWN,IT-10,TTI=80,RM1=16.5%,LG-CIT)(2)
FER(DOWN,IT-10,TTI=80,RM1=16.5%,LG-CIT)(2)
FRAME FERROR RATE(FER)
1E+00
1E-01
1E-02
1E-03
1E-04
1E-05
1E-06
1
1.2
1.4
1.6
1.8
2
2.2
2.4
EB/NO(dB)

FIG. 20

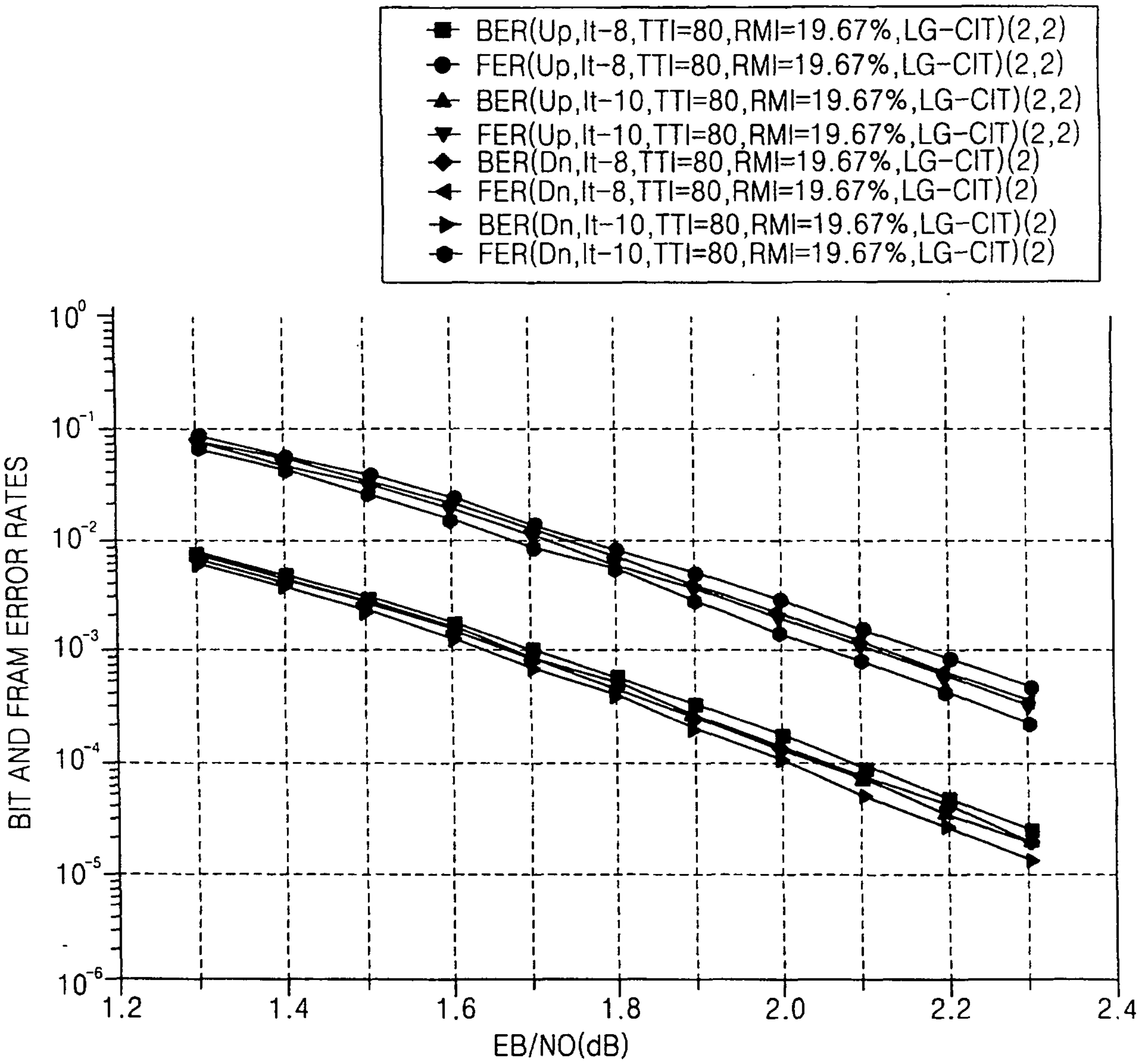
BER(Up,It-8,TTI=80,RMI=19.67%,LG-CIT)(2,2)
FER(Up,It-8,TTI=80,RMI=19.67%,LG-CIT)(2,2)
BER(Up,It-10,TTI=80,RMI=19.67%,LG-CIT)(2,2)
FER(Up,It-10,TTI=80,RMI=19.67%,LG-CIT)(2,2)
BER(Dn,It-8,TTI=80,RMI=19.67%,LG-CIT)(2)
FER(Dn,It-8,TTI=80,RMI=19.67%,LG-CIT)(2)
BER(Dn,It-10,TTI=80,RMI=19.67%,LG-CIT)(2)
FER(Dn,It-10,TTI=80,RMI=19.67%,LG-CIT)(2)
BIT AND FRAM ERROR RATES
$10^0$
$10^{-1}$
$10^{-2}$
$10^{-3}$
$10^{-4}$
$10^{-5}$
$10^{-6}$
1.2
1.4
1.6
1.8
2.0
2.2
2.4
EB/NO(dB)

FIG. 21

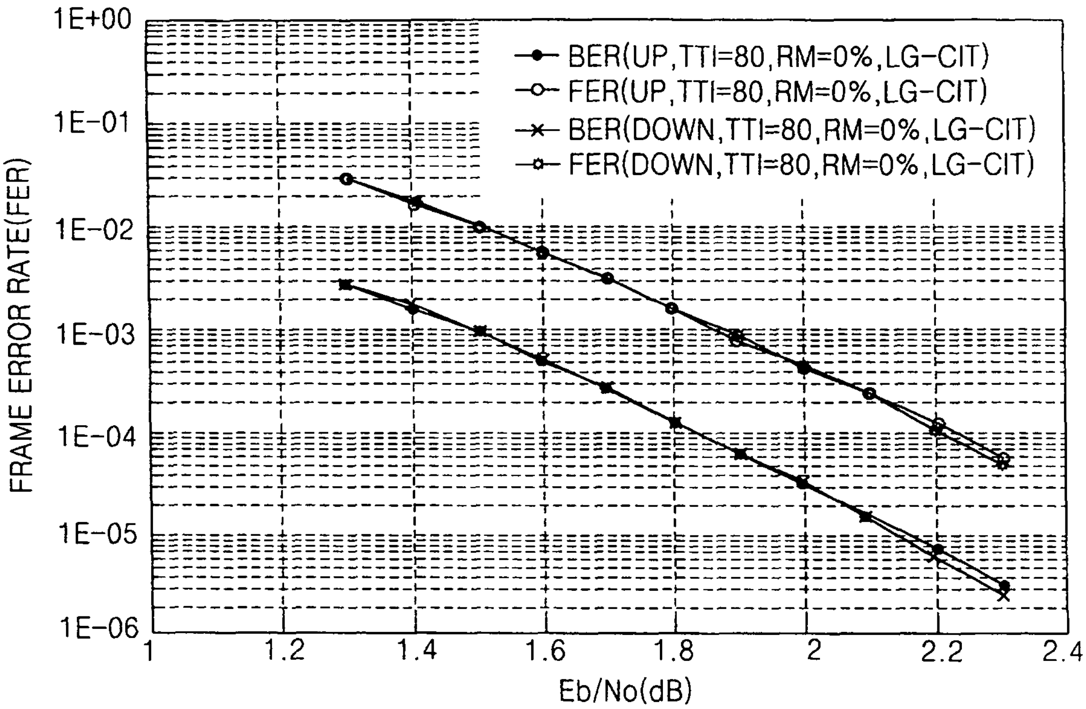
1E+00
1E-01
1E-02
1E-03
1E-04
1E-05
1E-06
FRAME ERROR RATE(FER)
BER(UP,TTI=80,RM=0%,LG-CIT)
FER(UP,TTI=80,RM=0%,LG-CIT)
BER(DOWN,TTI=80,RM=0%,LG-CIT)
FER(DOWN,TTI=80,RM=0%,LG-CIT)
1
1.2
1.4
1.6
1.8
2
2.2
2.4
Eb/No(dB)

FIG. 22

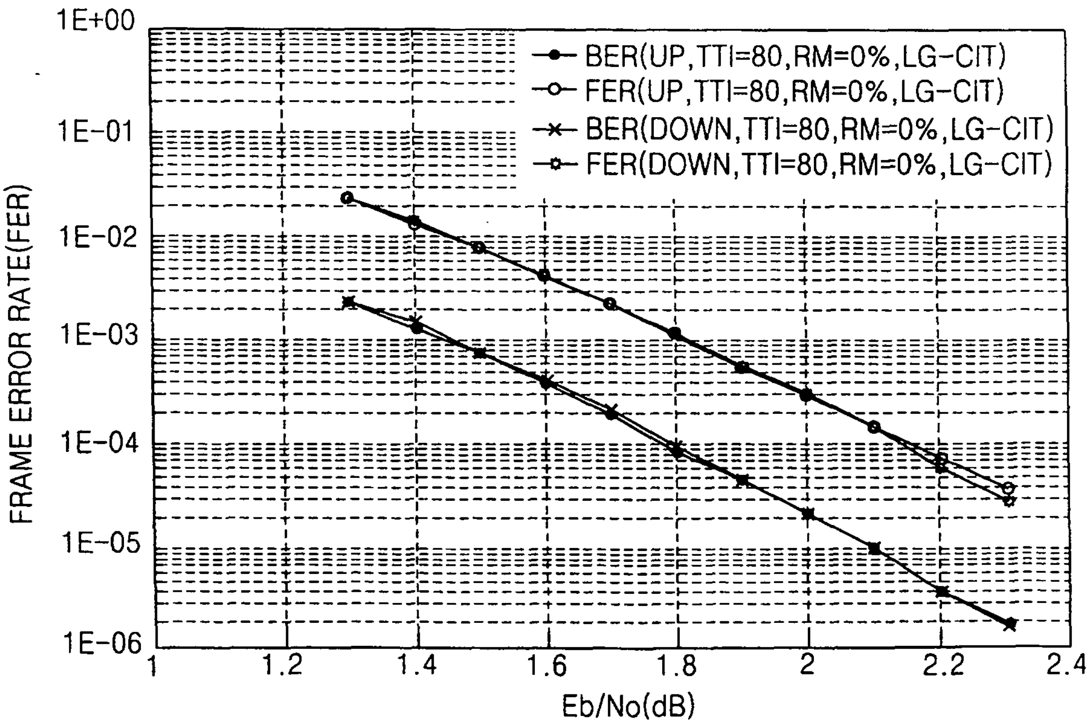
1E+00
1E-01
1E-02
1E-03
1E-04
1E-05
1E-06
FRAME ERROR RATE(FER)
BER(UP,TTI=80,RM=0%,LG-CIT)
FER(UP,TTI=80,RM=0%,LG-CIT)
BER(DOWN,TTI=80,RM=0%,LG-CIT)
FER(DOWN,TTI=80,RM=0%,LG-CIT)
1
1.2
1.4
1.6
1.8
2
2.2
2.4
Eb/No(dB)

FIG. 23

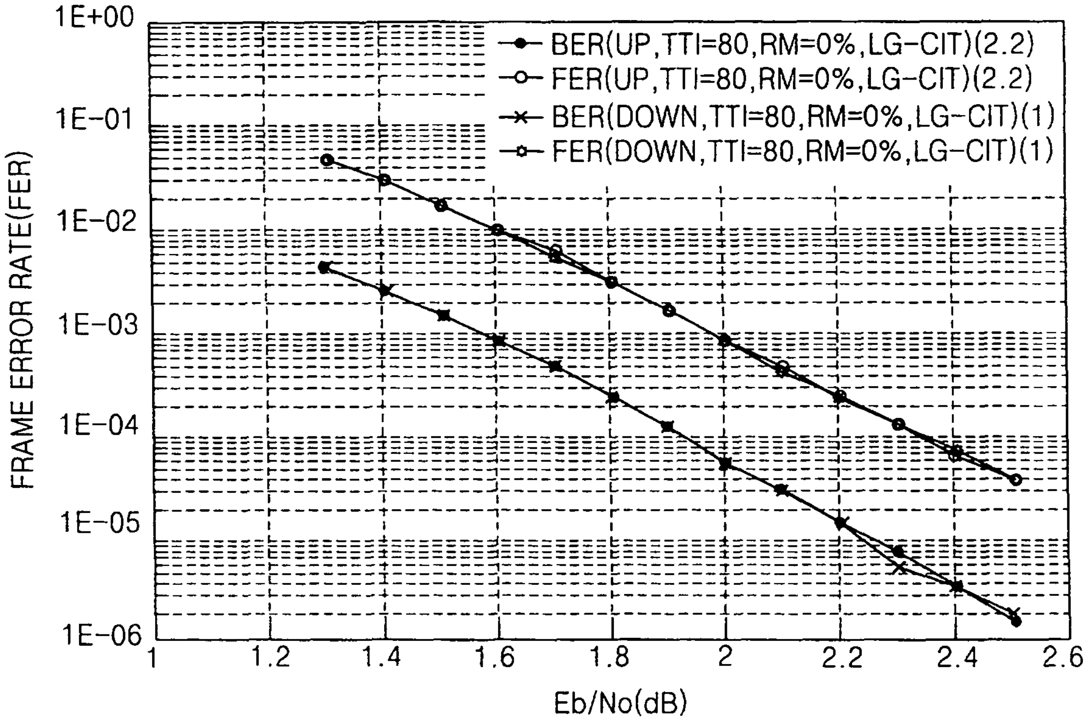
1E+00
1E-01
1E-02
1E-03
1E-04
1E-05
1E-06
FRAME ERROR RATE(FER)
BER(UP,TTI=80,RM=0%,LG-CIT)(2.2)
FER(UP,TTI=80,RM=0%,LG-CIT)(2.2)
BER(DOWN,TTI=80,RM=0%,LG-CIT)(1)
FER(DOWN,TTI=80,RM=0%,LG-CIT)(1)
1
1.2
1.4
1.6
1.8
2
2.2
2.4
2.6
Eb/No(dB)

FIG. 24

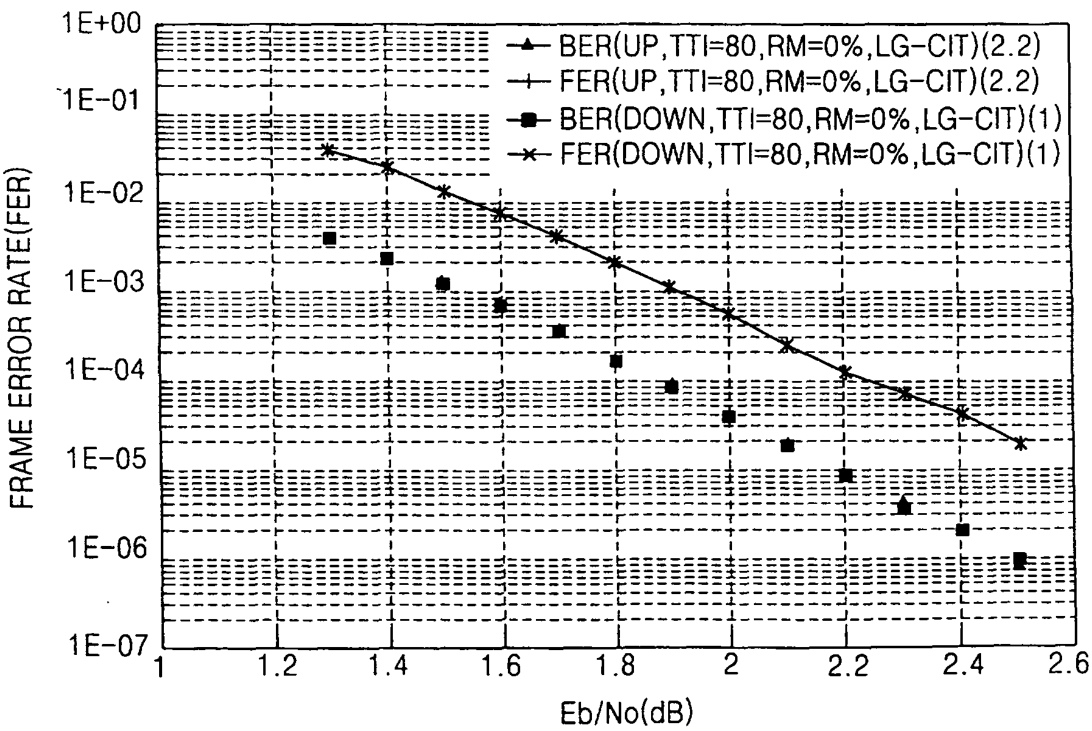
1E+00
1E-01
1E-02
1E-03
1E-04
1E-05
1E-06
1E-07
FRAME ERROR RATE(FER)
BER(UP,TTI=80,RM=0%,LG-CIT)(2.2)
FER(UP,TTI=80,RM=0%,LG-CIT)(2.2)
BER(DOWN,TTI=80,RM=0%,LG-CIT)(1)
FER(DOWN,TTI=80,RM=0%,LG-CIT)(1)
1
1.2
1.4
1.6
1.8
2
2.2
2.4
2.6
Eb/No(dB)

FIG. 25

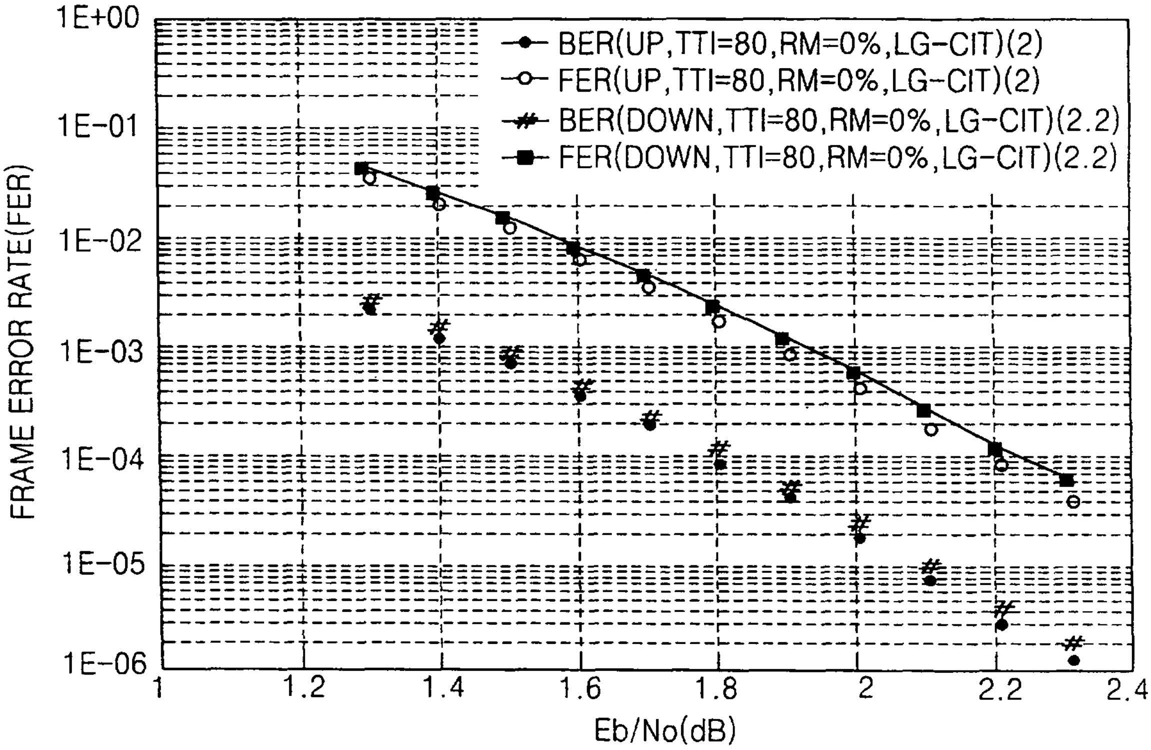
1E+00
1E-01
1E-02
1E-03
1E-04
1E-05
1E-06
FRAME ERROR RATE(FER)
BER(UP,TTI=80,RM=0%,LG-CIT)(2)
FER(UP,TTI=80,RM=0%,LG-CIT)(2)
BER(DOWN,TTI=80,RM=0%,LG-CIT)(2.2)
FER(DOWN,TTI=80,RM=0%,LG-CIT)(2.2)
1
1.2
1.4
1.6
1.8
2
2.2
2.4
Eb/No(dB)

FIG. 26

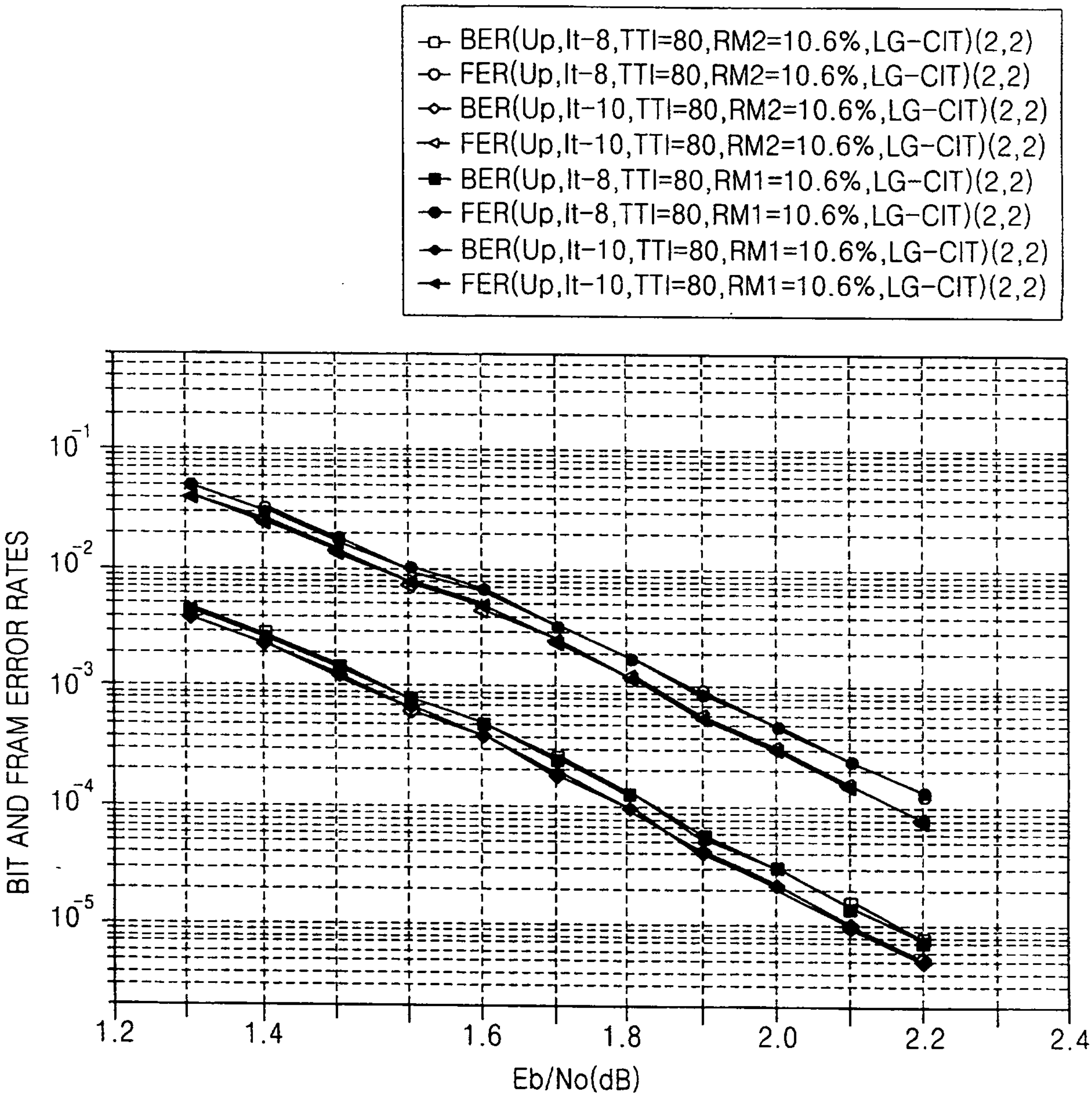
BER(Up,It-8,TTI=80,RM2=10.6%,LG-CIT)(2,2)
FER(Up,It-8,TTI=80,RM2=10.6%,LG-CIT)(2,2)
BER(Up,It-10,TTI=80,RM2=10.6%,LG-CIT)(2,2)
FER(Up,It-10,TTI=80,RM2=10.6%,LG-CIT)(2,2)
BER(Up,It-8,TTI=80,RM1=10.6%,LG-CIT)(2,2)
FER(Up,It-8,TTI=80,RM1=10.6%,LG-CIT)(2,2)
BER(Up,It-10,TTI=80,RM1=10.6%,LG-CIT)(2,2)
FER(Up,It-10,TTI=80,RM1=10.6%,LG-CIT)(2,2)
BIT AND FRAM ERROR RATES
10^-1
10^-2
10^-3
10^-4
10^-5
1.2
1.4
1.6
1.8
2.0
2.2
2.4
Eb/No(dB)

FIG. 27

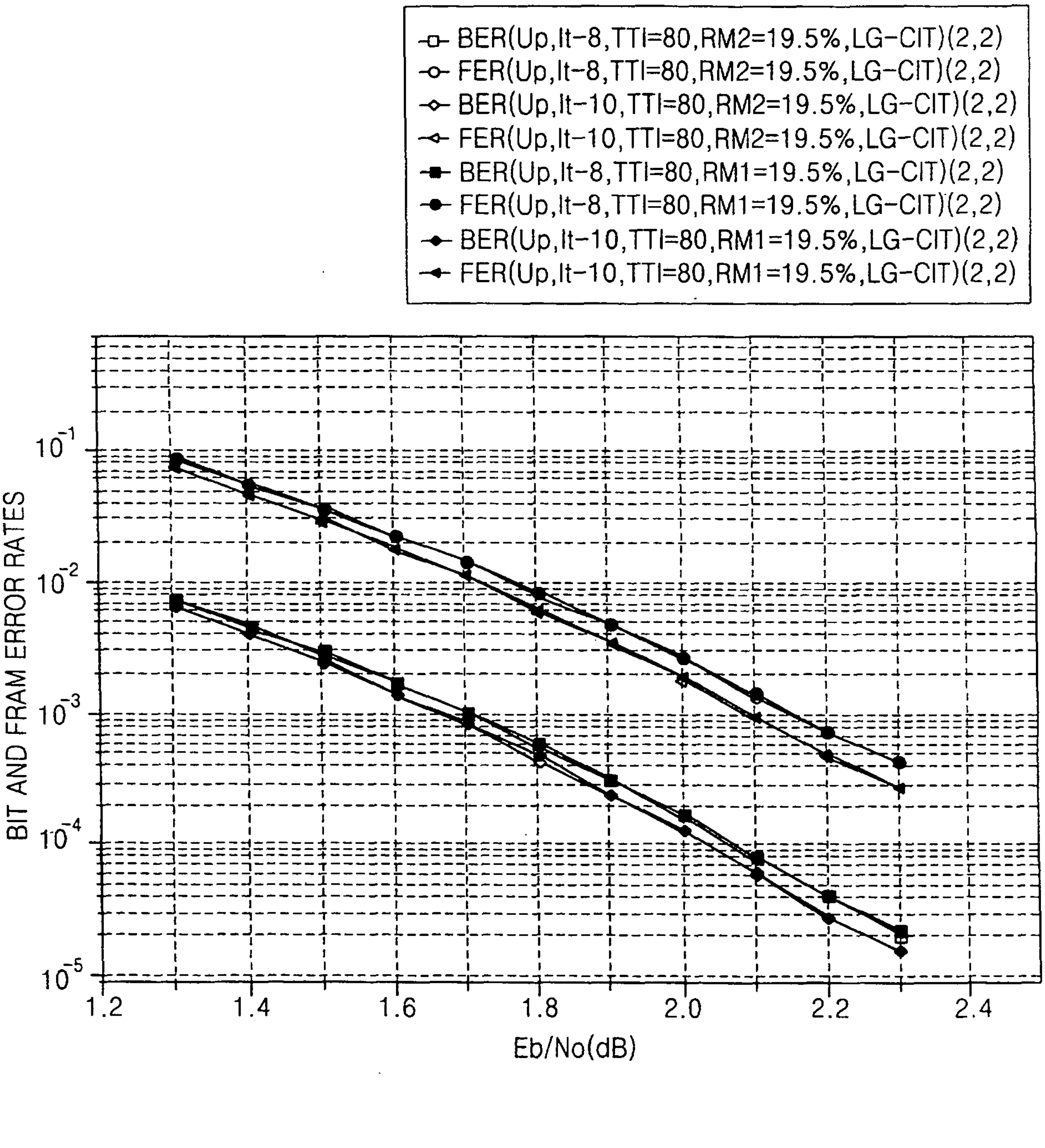
BER(Up,It-8,TTI=80,RM2=19.5%,LG-CIT)(2,2)
FER(Up,It-8,TTI=80,RM2=19.5%,LG-CIT)(2,2)
BER(Up,It-10,TTI=80,RM2=19.5%,LG-CIT)(2,2)
FER(Up,It-10,TTI=80,RM2=19.5%,LG-CIT)(2,2)
BER(Up,It-8,TTI=80,RM1=19.5%,LG-CIT)(2,2)
FER(Up,It-8,TTI=80,RM1=19.5%,LG-CIT)(2,2)
BER(Up,It-10,TTI=80,RM1=19.5%,LG-CIT)(2,2)
FER(Up,It-10,TTI=80,RM1=19.5%,LG-CIT)(2,2)
BIT AND FRAM ERROR RATES
10^-1
10^-2
10^-3
10^-4
10^-5
1.2
1.4
1.6
1.8
2.0
2.2
2.4
Eb/No(dB)

FIG. 28

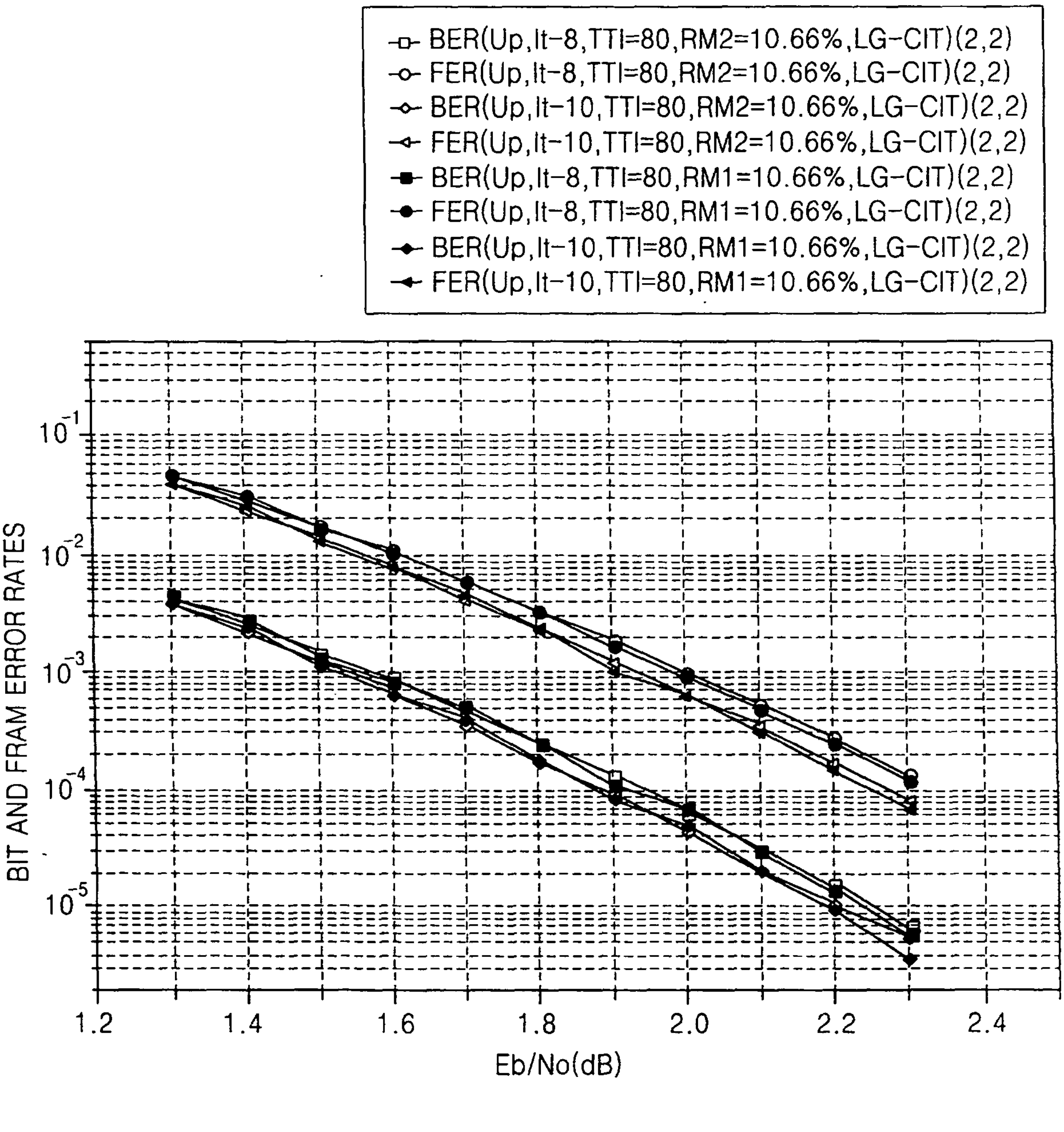
BER(Up,It-8,TTI=80,RM2=10.66%,LG-CIT)(2,2)
FER(Up,It-8,TTI=80,RM2=10.66%,LG-CIT)(2,2)
BER(Up,It-10,TTI=80,RM2=10.66%,LG-CIT)(2,2)
FER(Up,It-10,TTI=80,RM2=10.66%,LG-CIT)(2,2)
BER(Up,It-8,TTI=80,RM1=10.66%,LG-CIT)(2,2)
FER(Up,It-8,TTI=80,RM1=10.66%,LG-CIT)(2,2)
BER(Up,It-10,TTI=80,RM1=10.66%,LG-CIT)(2,2)
FER(Up,It-10,TTI=80,RM1=10.66%,LG-CIT)(2,2)
BIT AND FRAM ERROR RATES
10^-1
10^-2
10^-3
10^-4
10^-5
1.2
1.4
1.6
1.8
2.0
2.2
2.4
Eb/No(dB)

FIG. 29

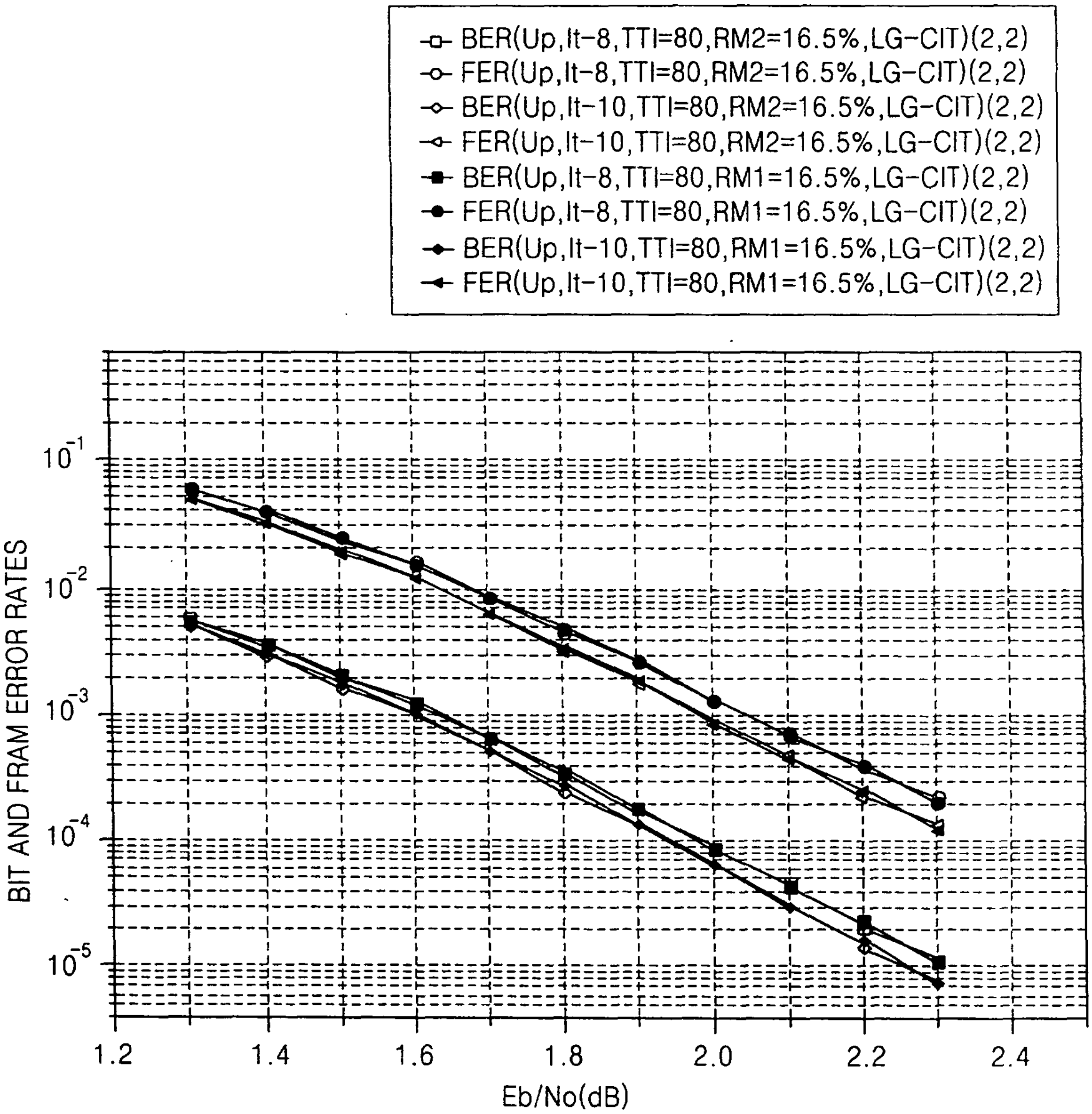
BER(Up,It-8,TTI=80,RM2=16.5%,LG-CIT)(2,2)
FER(Up,It-8,TTI=80,RM2=16.5%,LG-CIT)(2,2)
BER(Up,It-10,TTI=80,RM2=16.5%,LG-CIT)(2,2)
FER(Up,It-10,TTI=80,RM2=16.5%,LG-CIT)(2,2)
BER(Up,It-8,TTI=80,RM1=16.5%,LG-CIT)(2,2)
FER(Up,It-8,TTI=80,RM1=16.5%,LG-CIT)(2,2)
BER(Up,It-10,TTI=80,RM1=16.5%,LG-CIT)(2,2)
FER(Up,It-10,TTI=80,RM1=16.5%,LG-CIT)(2,2)
BIT AND FRAM ERROR RATES
$10^{-1}$
$10^{-2}$
$10^{-3}$
$10^{-4}$
$10^{-5}$
1.2
1.4
1.6
1.8
2.0
2.2
2.4
Eb/No(dB)

FIG. 30

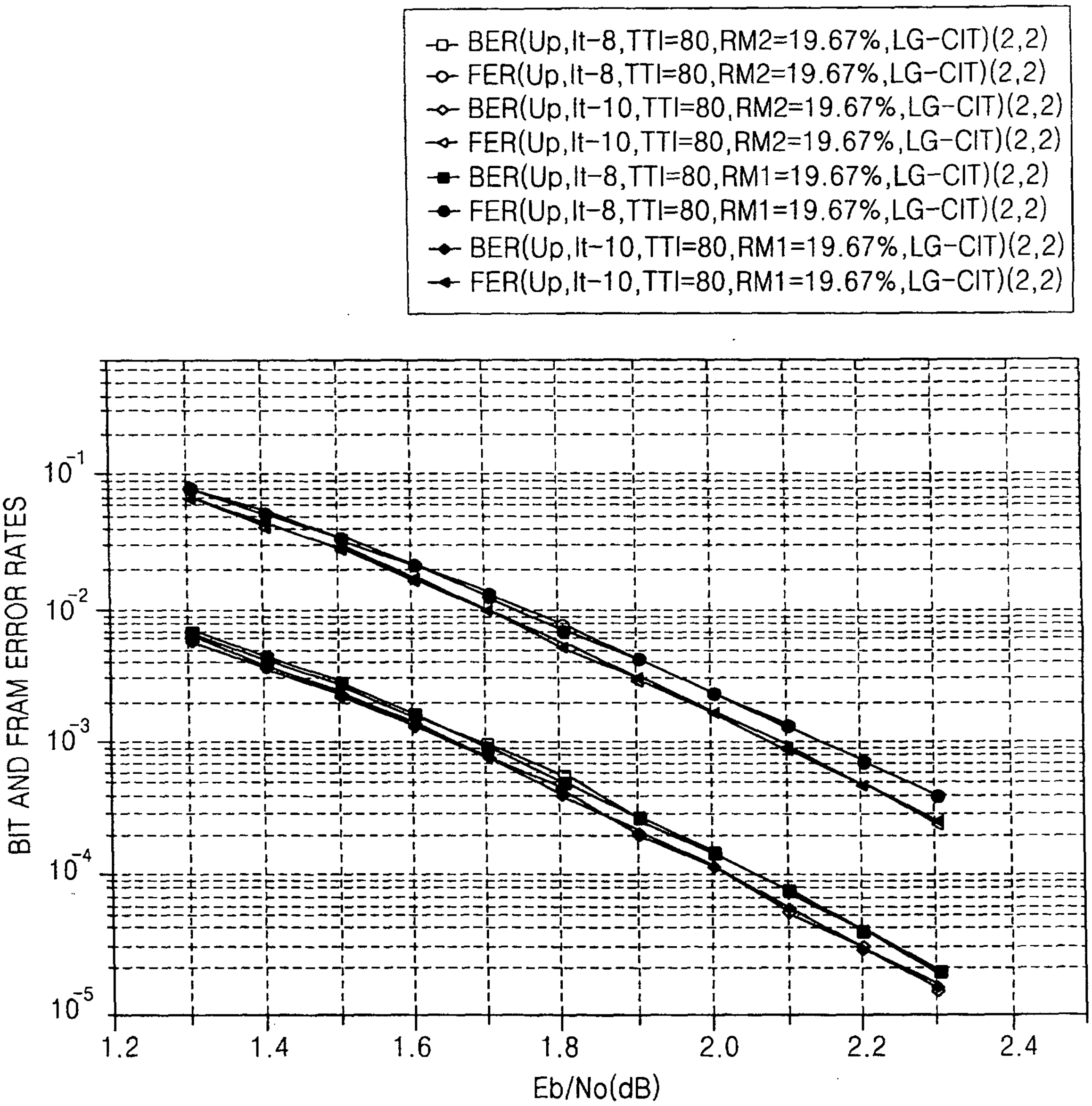
BER(Up,It-8,TTI=80,RM2=19.67%,LG-CIT)(2,2)
FER(Up,It-8,TTI=80,RM2=19.67%,LG-CIT)(2,2)
BER(Up,It-10,TTI=80,RM2=19.67%,LG-CIT)(2,2)
FER(Up,It-10,TTI=80,RM2=19.67%,LG-CIT)(2,2)
BER(Up,It-8,TTI=80,RM1=19.67%,LG-CIT)(2,2)
FER(Up,It-8,TTI=80,RM1=19.67%,LG-CIT)(2,2)
BER(Up,It-10,TTI=80,RM1=19.67%,LG-CIT)(2,2)
FER(Up,It-10,TTI=80,RM1=19.67%,LG-CIT)(2,2)
BIT AND FRAM ERROR RATES
$10^{-1}$
$10^{-2}$
$10^{-3}$
$10^{-4}$
$10^{-5}$
1.2
1.4
1.6
1.8
2.0
2.2
2.4
Eb/No(dB)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5898698 A